# EUROPEAN PATENT SPECIFICATION

(11) **EP 4 384 021 B1**
(45) Date of publication and mention of the grant of the patent: **08.07.2026**
(21) Application number: 21758739.3
(22) Date of filing: 10.08.2021
(51) Int. Cl.: A23J 3/14, A23L 15/00, A23L 29/262, A23L 29/269

(54) **COMPOSITIONS FOR HUMAN CONSUMPTION**
ZUSAMMENSETZUNGEN FÜR MENSCHLICHEN VERZEHR
COMPOSITIONS POUR CONSOMMATION HUMAINE

(43) Date of publication of application: 19.06.2024
(73) Proprietor: PLANT HEADS, Guernsey GY1 4ET (GB)
(72) Inventor: JONES, David Trevor, Preston, PR2 3LF (GB); CLAYTON, Philip, Preston, PR2 3LF (GB)
(74) Representative: Mathys & Squire
(86) International application number: PCT/GB2021/052075
(87) International publication number: WO 2023/017231

(56) References cited:
- WO-A1-2017/014806
- WO-A1-2017/014967
- WO-A1-2022/020149
- DATABASE GNPD [online] MINTEL; 10 February 2021 (2021-02-10), ANONYMOUS: "The No-Egg Egg", XP055912477, retrieved from https://www.gnpd.com/sinatra/recordpage/8475273/ Database accession no. 8475273
- DATABASE GNPD [online] MINTEL; 23 February 2015 (2015-02-23), ANONYMOUS: "Banana Bread Mix", XP055912466, retrieved from https://www.gnpd.com/sinatra/recordpage/2997457/ Database accession no. 2997457
- GRIZIO MIRANDA ET AL: "Plant-based egg alternatives: Optimizing for functional properties and applications", THE GOOD FOOD INSTITUTE, 1 June 2018 (2018-06-01), XP055857418, Retrieved from the Internet <URL:https://gfi.org/images/uploads/2018/06/Plantbasedeggalternatives.pdf> [retrieved on 20211103]

## Description

The present invention relates to compositions for human consumption, in particular chicken egg-replacement compositions.

Chicken eggs are a versatile ingredient used in a variety of food applications, such as baking and cooking to prepare foods such as omelettes, quiches, cakes, sponges, soufflés, Yorkshire puddings, mayonnaise, custards and salad dressings. The properties of chicken eggs allow them to perform numerous different functions, such as thickening, binding, coagulating, emulsifying, leavening, aerating, coating and glazing. In addition to their functional properties, chicken eggs are nutritious, as they provide a high protein content and vitamins and minerals.

Some individuals may choose not to eat chicken eggs as part of their diet, for example, as chicken eggs are a source of cholesterol, they may be avoided by those individuals with high cholesterol. If used raw in recipes, chicken eggs can increase the risk of developing a *Salmonella* or *Escherichia coli* infection. Some individuals may also be allergic to chicken eggs or opt out of eating chicken eggs as they choose to adopt a vegan diet. Hence, there is an increasing consumer need for chicken egg-replacement compositions that can substitute chicken eggs.

WO 2017/014806 A1 and WO 2017/014967 A1 describe plant-based egg substitute compositions.

Current chicken egg-replacement compositions are mainly designed for a particular culinary function, for example, in either emulsifying, baking or cooking. As a result, a different chicken egg-replacement composition is required for each specific food application. Furthermore, current chicken egg-replacement compositions contain ingredients that are allergenic (e.g. soya protein) and/or may be carcinogenic (e.g. carrageenan). Hence, as current chicken egg-replacement compositions cannot achieve the many functions and nutritional qualities of a chicken egg, the use of said chicken egg-replacement compositions is not aligned with consumer demands for convenience, dietary requirements, and ease of preparation.

The present invention overcomes one or more of the above-mentioned problems.

The present inventors have surprisingly found that a composition comprising a legume protein in combination with a first, second, and third hydrocolloid as claimed, exhibits advantageous textural, visual, and/or flavour properties when cooked. Said properties are similar to those exhibited by chicken eggs.

Advantageously, the invention may provide a dry composition or liquid composition that is vegan, highly stable, has a high resemblance to a chicken egg and/or can be utilised in a variety of downstream food applications (unlike current chicken egg-replacement products), whilst containing little or no (preferably no) allergenic and/or carcinogenic ingredients.

The compositions of the invention are preferably vegan compositions, wherein the compositions comprise substantially no animal ingredients (preferably comprise no animal ingredients). In more detail, the compositions of the invention are preferably egg-replacement compositions.

In one aspect the invention provides a dry composition for human consumption, the composition comprising:
(a) a legume protein, wherein the legume protein comprises a pea protein present at 30-35 wt.%;
(b) a starch, wherein the starch is a pea starch present at 10-14 wt.%;
(c) a first hydrocolloid, wherein the first hydrocolloid is a methylcellulose present at 18.7-20.7 wt.%;
(d) a second hydrocolloid, wherein the second hydrocolloid is a high acyl gellan gum present at 5-6 wt.%;
(e) a third hydrocolloid, wherein the third hydrocolloid is a low acyl gellan gum present at 2-4 wt.%;
(f) a salt, wherein the salt is calcium lactate present at 3-6 wt.%; and
(g) calcium carbonate present at 0.6-1.2 wt.%.

The term "dry composition" as used herein refers to a composition in which no, or substantially no, liquid is present. In some embodiments the term "dry composition" refers to a composition in which the only liquid present is that associated with, absorbed by, or adsorbed to an ingredient of the composition. In one embodiment the term "dry composition" refers to a composition having a liquid content of less than 5 wt.%, such as less than 1 or 0.1 wt.%. Preferably the term "dry" refers to a composition having a liquid content of less than 0.01 wt. %. The liquid in this context may be an aqueous solution (preferably water), an oil or a combination thereof.

In one embodiment the dry composition is a powder. Preferably, the composition is rehydrated using water, thereby providing a liquid composition of the invention.

In one aspect of the present invention there is provided a liquid composition for human consumption, the composition comprising:
(a) a legume protein, wherein the legume protein comprises a pea protein present at 2-3 wt. %;
(b) a starch, wherein the starch is a pea starch present at 0.6-1.2 wt.%;
(c) a first hydrocolloid, wherein the first hydrocolloid is a methylcellulose present at 1.51-1.67 wt.%;
(d) a second hydrocolloid, wherein the second hydrocolloid is a high acyl gellan gum present at 0.4-0.5 wt.%;
(e) a third hydrocolloid, wherein the third hydrocolloid is a low acyl gellan gum present at 0.20-0.34 wt.%;
(f) a salt, wherein the salt is calcium lactate present at 0.30-0.45 wt.%;
(g) calcium carbonate present at 0.05-0.09 wt.%;
(h) a lipid composition, wherein the lipid composition is a vegetable oil present at 1.5-2.5 wt. %; and
(i) water present at 88-91 wt.%.

The term "liquid composition" as used herein to refer to a hydrated form of a dry composition. Hydration of a dry composition is achieved through the addition of a liquid as described herein.

In one embodiment a liquid present in a composition of the invention is a liquid activator. The term "liquid activator" as used herein refers to a liquid that promotes the formation of a gel by a hydrocolloid. A liquid (and thus any amount of liquid described herein) may be additional to any residual (e.g. *de minimis*) amount of liquid present in the dry composition. A liquid may comprise water, milk, brine, oil, and/or juice. Preferably, the liquid is water, lactic acid, and/or oil. In one embodiment, the liquid is a combination of lactic acid and water. In one embodiment the dry composition comprises a starch and the liquid is a combination of water, lactic acid, and oil.

In one embodiment the legume protein, first hydrocolloid, second hydrocolloid, third hydrocolloid and salt are homogenously distributed in the liquid composition.

One of the challenges faced by the present inventors was the ability to solubilise the hydrocolloids when preparing a liquid composition of the invention. Advantageously, the inventors discovered an optimal weight ratio of water to powder when hydrating the dry composition of the invention that imparts solubility to the hydrocolloids and allows the liquid composition to be easily poured.

In a one embodiment, the liquid (e.g. a combination of lactic acid and water) of the liquid composition may be present preferably at at least 90 wt.%, more preferably at at least 92 wt.%. In one embodiment the liquid may be present in the liquid composition at less than or equal to 98 wt.% or 97 wt.%, preferably at less than or equal to 96 wt.%, more preferably at less than or equal to 95 wt.%. In one embodiment, the liquid is present in the liquid composition preferably at 90-95 wt.%, more preferably at 92-94 wt.% (e.g. at 93.42 wt.%).

Water (e.g. excluding any water present in a lactic acid) may be present in the liquid composition preferably at
at least 89 wt.%. In one embodiment water is present in the liquid composition
preferably at less than or equal to 90.5 wt.%. In one embodiment water is present in the liquid composition e.g. at 89.84 wt.%.

In one embodiment the liquid comprises an acid, preferably lactic acid. In one embodiment an acid (preferably lactic acid) may be present at 0.001 to 5 wt.%, e.g. 0.01 to 1 wt.%. In one embodiment the lactic acid is present in the liquid composition at 0.02-0.22 wt.%, 0.04-0.20 wt.%, preferably 0.06-0.18 wt.%, more preferably 0.08-0.16 wt.% (e.g. at 0.10 wt.% or 0.13 wt.%).

The term "weight percentage" and "wt.%" are used synonymously herein. The term "wt.%" as used herein is a weight percentage of the total composition (e.g. dry composition or liquid composition), wherein the total weight of the composition is 100 wt.%. For example, for a 100 g composition, 10 g of an ingredient corresponds to 10 wt.% of the composition. Thus, the skilled person will appreciate that where a range of wt.%s are provided herein for a plurality of constituents, the amount of said constituents in any given composition will be selected such that the total weight of the composition corresponds to 100 wt.%.

The term "legume protein" as used herein may refer to a protein of the plant family *Fabaceae*. A legume protein may be obtained by any suitable method known in the art. Preferably, a legume protein is isolated from a legume plant or part thereof.

The term "part thereof" when used in this context means any material of a legume plant, including the seed, nut, bean, pod, flower or fruit of a legume plant, preferably the seed of a legume plant (e.g. a pea obtained from a pod of a legume plant).

Alternatively, a legume protein may be obtained from a recombinant source. Thus, in one embodiment, a legume protein is encoded by a nucleic acid and expressed in a recombinant non-animal host cell. In one embodiment, the non-animal host-cell is a prokaryotic host cell, preferably an *Escherichia coli* (*E. coli*) host cell. However, it is preferred that a legume protein is not obtained from a recombinant and/or genetically-modified source.

A legume protein may be a protein of the plant genus *Phaseolus, Cicer, Lathyrus, Lens, Pisum, Vicia, Abrus, Lablab, Glycine, Vigna, Ceratonia* preferably of the plant genus *Pisum*.

A legume protein may be a protein of the plant species *Phaseolus vulgaris*, *Phaseolus lunatus*, *Phaseolus coccineus, Cicer arietinum, Lathyrus japonicus, Lathyrus odoratus, Lens culinaris, Pisum sativum, Vicia faba, Abrus precatorius, Lablab purpureus, Glycine max, Vigna radiata, Vigna unguiculata, Ceratonia siliqua,* preferably *Pisum sativum*.

In one embodiment, the legume protein is a non-allergenic legume protein. Thus, in a preferred embodiment, the composition does not comprise an allergenic legume protein (e.g. a soy protein).

A legume protein comprises a pea protein . In one embodiment a legume protein is not a fava bean protein.

Where a legume protein is referred to herein, it is preferred that this is a mixture of a plurality of different proteins from a legume (e.g. in a legume isolate). Thus, an amount of a legume protein referred to herein may mean a total amount of the plurality of legume proteins present in a composition of the invention.

Advantageously, legume proteins exhibit a number of improvements over other types of proteins as shown herein. Additionally, legume proteins are improved over other proteins, such as algal proteins, which are associated with poor hedonic quality, legal issues, safety issues, and/or production issues.

The legume protein may be present in the dry composition preferably at at least 32 wt.%.

For example, the legume protein may be present in the dry composition at 33.53 wt.% .

The legume protein may be present in the liquid composition at 2.70 wt.% or at 2.71 wt.% .

A legume protein referred to herein may be a legume protein isolate. Thus, an amount of a legume protein referred to herein may mean an amount of a legume protein isolate. A protein isolate may be one comprising between 80-90 wt.% protein, preferably 85 wt.% protein.

In one embodiment wherein the dry composition comprises a starch, the amount of legume protein isolate is reduced when compared to a dry composition that does not comprise starch.

The legume protein isolate may be present in the dry composition at at least 32 wt.%, 34 wt.% or 36 wt.%, preferably at least 37 wt.%, more preferably at least 38 wt.%.

The legume protein isolate may be present in the dry composition at less than or equal to 70 wt.%, 65 wt.%, 60 wt.%, 55 wt.%, 50 wt.%, 48 wt.%, 46 wt.% or 44 wt.%, preferably less than or equal to 43 wt.%, more preferably less than or equal to 42 wt.%.

For example, the legume protein isolate may be present in the dry composition at 32-48 wt.%, or 34-46 wt.%, preferably at 36-44 wt.%, more preferably at 38-42 wt.% (e.g. at 39.45 wt.%).

In one embodiment the legume protein isolate is present in the liquid composition at less than or equal to 7 wt.%. The legume protein isolate may be present in the liquid composition at less than or equal to 6 wt.% or 5.5 wt.%, preferably at less than or equal to 5 wt.%, more preferably at less than or equal to 4 wt.%.

The legume protein isolate may be present in the liquid composition preferably at 2.5-4 wt.% (e.g. at 3.18 wt.% or at 3.19 wt.%).

In one embodiment the legume protein comprises hydrophobic amino acids at an amount of less than or equal to 63.1 mg/g, 63 mg/g, 62 mg/g, 61 mg/g, 60 mg/g, 59 mg/g, 58 mg/g, 57 mg/g, 56 mg/g, 55 mg/g, 54 mg/g, 53 mg/g, 52 mg/g, or 51 mg/g of protein, preferably less than or equal to 50 mg/g of protein, more preferably less than or equal to 47 mg/g of protein.

In one embodiment the legume protein comprises hydrophobic amino acids at an amount of at least 30 mg/g, 31 mg/g, 32 mg/g, 33 mg/g, 34 mg/g, 35 mg/g, 36 mg/g, 37 mg/g, 38 mg/g, or 39 mg/g of protein, preferably at least 40 mg/g of protein, more preferably at least 43 mg/g of protein. In one embodiment the legume protein comprises hydrophobic amino acids at an amount of 30-60 mg/g of protein. The legume protein may comprise hydrophobic amino acids at an amount of 35-55 mg/g of protein, preferably 40-50 mg/g of protein (e.g. at 45.07 mg/g of protein).

In one embodiment the legume protein comprises hydrophilic amino acids at an amount of less than or equal to 38.5 mg/g of protein. For example, the legume protein of the composition may comprise hydrophilic amino acids at an amount of less than or equal to 38 mg/g, 37.5 mg/g, 37 mg/g, 36.5 mg/g, 36 mg/g, 35.5 mg/g or 35 mg/g of protein, preferably less than or equal to 35 mg/g of protein, more preferably less than or equal to 33 mg/g of protein. In one embodiment the legume protein comprises hydrophilic amino acids at an amount of at least 20 mg/g. For example, the legume protein may comprise hydrophilic amino acids at an amount of at least 21 mg/g, 22 mg/g, 23 mg/g, 24 mg/g, 25 mg/g, 26 mg/g, 27 mg/g or 28 mg/g, of protein, preferably at an amount of at least 28 mg/g of protein, more preferably at an amount of at least 30 mg/g of protein. In one embodiment the legume protein comprises hydrophilic amino acids at an amount of 26-38 mg/g of protein. The legume protein may comprise hydrophilic amino acids at an amount of 28-36 mg/g or 30-34 mg/g, preferably 30-34 mg/g, more preferably 30-33 mg/g of protein (e.g. at 31.57 mg/g of protein).

In one embodiment the legume protein comprises total essential amino acids at an amount of less than or equal to 40 mg/g of protein. For example, the legume protein of the composition may comprise total essential amino acids amino acids at an amount of less than or equal to 38 mg/g, or 36 mg/g of protein, preferably less than or equal to 34 mg/g of protein, more preferably less than or equal to 32 mg/g of protein. In one embodiment the legume protein comprises total essential amino acids at an amount of at least 18 mg/g. For example, the legume protein may comprise total essential amino acids at an amount of at least 20 mg/g, 22 mg/g, or 24 mg/g, of protein, preferably at an amount of at least 26 mg/g of protein, more preferably at an amount of at least 28 mg/g of protein. In one embodiment the legume protein comprises total essential amino acids at an amount of 20-40 mg/g of protein. The legume protein may comprise total essential amino acids at an amount of 22-28 mg/g or 24-36 mg/g, preferably 26-34 mg/g, more preferably 28-32 mg/g of protein (e.g. at 29.98 mg/g of protein).

In one embodiment the legume protein comprises amino acids comprising sulphur (e.g. cysteine and/or methionine, preferably cysteine) at an amount of less than or equal to 2.6 mg/g of protein. For example, the legume protein of the composition may comprise amino acids amino acids comprising sulphur (e.g. cysteine and/or methionine, preferably cysteine) at an amount of less than or equal to 2.5 mg/g, or 2.4 mg/g of protein, preferably less than or equal to 2.3 mg/g of protein, more preferably less than or equal to 2.1 mg/g of protein. In one embodiment the legume protein comprises amino acids comprising sulphur (e.g. cysteine and/or methionine, preferably cysteine) at an amount of at least 1 mg/g. For example, the legume protein may comprise amino acids comprising sulphur (e.g. cysteine and/or methionine, preferably cysteine) at an amount of at least 1.2 mg/g, or 1.4 mg/g, preferably at an amount of at least 1.6 mg/g of protein, more preferably at an amount of at least 1.8 mg/g of protein. In one embodiment the legume protein comprises amino acids comprising sulphur (e.g. cysteine and/or methionine, preferably cysteine) at an amount of 1-3 mg/g of protein or 1.4-2.5 mg/g, preferably 1.6-2.3 mg/g, more preferably 1.8-2.1 mg/g of protein (e.g. at 1.98 mg/g of protein).

In one embodiment the legume protein comprises amino acids that contribute to a savoury flavour at an amount of less than or equal to 30 mg/g of protein. For example, the legume protein of the composition may comprise amino acids that contribute to a savoury flavour at an amount of less than or equal to 29 mg/g, or 27 mg/g of protein, preferably less than or equal to 25 mg/g of protein, more preferably less than or equal to 23 mg/g of protein. In one embodiment the legume protein comprises amino acids that contribute to a savoury flavour at an amount of at least 12 mg/g. For example, the legume protein may comprise amino acids that contribute to a savoury flavour at an amount of at least 14 mg/g, or 16 mg/g, preferably at an amount of at least 18 mg/g of protein, more preferably at an amount of at least 20 mg/g of protein. In one embodiment the legume protein comprises amino acids that contribute to a savoury flavour at an amount of 10-32 mg/g of protein or 12-30 mg/g, preferably 18-24 mg/g, more preferably 20-22 mg/g of protein (e.g. at 21.37 mg/g of protein).

In one embodiment the legume protein comprises amino acids that contribute to a sweet flavour at an amount of less than or equal to 20 mg/g of protein. For example, the legume protein of the composition may comprise amino acids that contribute to a sweet flavour at an amount of less than or equal to 18 mg/g, or 16 mg/g of protein, preferably less than or equal to 14 mg/g of protein, more preferably less than or equal to 12 mg/g of protein. In one embodiment the legume protein comprises amino acids that contribute to a sweet flavour at an amount of at least 1 mg/g. For example, the legume protein may comprise amino acids that contribute to a sweet flavour at an amount of at least 2 mg/g, or 4 mg/g, preferably at an amount of at least 6 mg/g of protein, more preferably at an amount of at least 8 mg/g of protein. In one embodiment the legume protein comprises amino acids that contribute to a sweet flavour at an amount of 3-15 mg/g of protein or 6-12 mg/g, preferably 9.2-10 mg/g, more preferably 9.1-9.8 mg/g of protein (e.g. at 9.43 mg/g of protein).

In one embodiment the legume protein comprises amino acids with an aromatic ring structure at an amount of less than or equal to 20 mg/g of protein. For example, the legume protein of the composition comprises amino acids with an aromatic ring structure at an amount of less than or equal to 16 mg/g, or 14 mg/g of protein, preferably less than or equal to 12 mg/g of protein, more preferably less than or equal to 10 mg/g of protein. In one embodiment the legume protein comprises amino acids with an aromatic ring structure at an amount of at least 2 mg/g, preferably at an amount of at least 4 mg/g of protein, more preferably at an amount of at least 6 mg/g of protein. In one embodiment the legume protein comprises amino acids with an aromatic ring structure at an amount of 2-14 mg/g of protein, preferably 6-10 mg/g, more preferably 7-9 mg/g of protein (e.g. at 8.18 mg/g of protein).

The amount of the above-described amino acids present may be the total amounts of said amino acids present in a composition of the invention.

The legume protein comprises (or consists of) a pea protein. Preferably, the pea protein is a pea protein isolate (e.g. including a plurality of different pea proteins).

The pea may be a golden pea or a split pea. Preferably a pea of the invention is a yellow split pea. Thus, a pea protein of the invention may be a yellow split pea protein and a pea protein isolate may be a yellow split pea protein isolate.

A pea protein isolate may be produced from a seed of a pea plant. Said seed may be milled to form a flour. Thus, in one embodiment a pea protein isolate is produced from a pea flour. The pea protein may be isolated from one or more other ingredients present in the pea flour, e.g. pea starch and/or fibre. Isolation may be carried out via any suitable technique, including filtration and/or precipitation. In one embodiment a pea protein isolate is precipitated from a pea flour, wherein such precipitation may be achieved using any known precipitation method. For example, a pea protein may be isolated via isoelectric point precipitation.

In more detail, a pea protein may be made using a method comprising protein extraction, purification, and drying. The method may comprise cleaning and splitting a pea crop and subjecting said peas to further processing. The cleaning process may use equipment such as indent cleaners, which are used to remove impurities. This process may ensure that any allergens, such as wheat, barley and other seeds are removed, as these products may contain gluten. Following cleaning, the pea may be split and "dehulled" using a dehuller (a device that splits the pea seed and extracts the part of the whole seed which is the hull [the shell may be removed]). Following the splitting process, the split peas may be further processed into starch, protein, and flour fractions. A wet fractionation method may then be applied. Pea protein isolates generally contain a higher concentration of protein than pea protein concentrates. The wet fractionation may involve the extraction of the protein at an alkaline pH. An alkaline pH is usually between pH 9.5-10.5. During the extraction of the protein, it may be dispersed in water so that other components of the pea, such as carbohydrates, are also extracted via ultrafiltration or iso-electric precipitation. Isoelectric precipitation may precipitate dissolved proteins out of the aqueous phase, which may then be separated. This stage may occur at a pH of 4.0-5.0. The protein may be separated from the by-products in a hydroclone. The precipitated protein (curd) may then be separated from the supernatant (whey) by filtration or centrifugation. The curd may be washed in order to remove residues of whey solubles. Subsequently, the pH may be neutralised and readjusted to about 7, and a dry protein isolate obtained with a final mechanical drying step, e.g. via spray-drying.

In one embodiment, a pea protein isolate may be obtained through a gentle water-based isolation process without the use of chemical solvent. The process may comprise dry and liquid phases. First, during a dry process, the outer shell of the pea (e.g. including insoluble fibres), may be removed by mechanical action. After grinding and milling, a flour retaining soluble fibres, starches and proteins, vitamins and minerals may be obtained. Being water-soluble, pea proteins may therefore be easily separated from fibre and starch by wet filtration and centrifugation. The next stage of the process may be to precipitate the protein to its isoelectric point followed by spray drying.

A pea protein isolate may further be a hydrolysed pea protein isolate (although it is preferred that the pea protein isolate is not a hydrolysed pea protein isolate). Said hydrolysed pea protein isolate may be produced by enzymatic hydrolysis of a pea protein isolate. Thus, in one embodiment, a hydrolysed pea protein is produced from an enzymatically hydrolysed pea protein isolate. Enzymatic hydrolysis may be carried out by the addition of an enzyme (protease) to a solution comprising a pea protein isolate. For example, a protease that may be used in enzymatic hydrolysis may be a serine endo-protease, a cysteine endo-protease or a metallo-endoprotease.

A process for producing a pea protein may include a distillation step.

The term "pea protein" as used herein refers to a protein of the plant genus *Pisum, Abrus or Lathyrus,* preferably *Pisum*. A pea protein may be obtained by any suitable method known in the art. Preferably, a legume protein is isolated from a pea plant or part thereof.

A pea protein may be a protein of the plant species *Pisum sativum, Abrus precatorius, Lathyrus japonicus or Lathyrus odoratus*, preferably *Pisum sativum.*

The pea protein isolate may be present in the dry composition at at least 32 wt.%, 34 wt.% or 36 wt.%, preferably at at least 37 wt.%, more preferably at at least 38 wt.%.

The pea protein may be present in the dry composition at less than or equal to 70 wt.%, 65 wt.%, 60 wt.%, 55 wt.%, 50 wt.%, 48 wt.%, 46 wt.% or 44 wt.%, preferably less than or equal to 43 wt.%, more preferably less than or equal to 42 wt.%.

For example, the pea protein isolate may be present in the dry composition at 32-48 wt.% or 34-46 wt.%, preferably 36-44 wt.%, more preferably 38-42 wt.% (e.g. at 39.45 wt.%).

The pea protein isolate may be present in the liquid composition at less than or equal 6 wt.% or 5.5 wt.%, preferably at less than or equal to 5 wt.%, more preferably at less than or equal to 4 wt.%.

The pea protein isolate may be present in the liquid composition at preferably 2.5-4 wt.% (e.g. at 3.18 wt.% or at 3.19 wt.%).

A pea protein may comprise hydrophobic amino acids at an amount of 35-55 mg/g of protein, preferably 40-50 mg/g of protein (e.g. at 45.07 mg/g of protein).

A pea protein may comprise hydrophilic amino acids at an amount of 28-36 mg/g or 30-34 mg/g, preferably 30-34 mg/g, more preferably 30-33 mg/g of protein (e.g. at 31.57 mg/g of protein).

The amount of the above-described amino acids present may be the total amounts of said amino acids present in a composition of the invention.

The term "hydrocolloid" as used herein refers to water soluble polymers that are characterised by a plurality of hydroxyl (-OH) groups. Said groups increase the binding affinity to water molecules and thus allow hydrocolloids to be hydrophilic polymers. Hydrocolloids may form viscous dispersions and/or gels when dissolved in water and under suitable conditions (for example, at a particular temperature or acidity and/or in the presence of ions). Hydrocolloids may impart a multitude of structural functions including but not limited to, gelling, thickening, stabilising and/or emulsifying of food. Thus, hydrocolloids may contribute towards the textural properties and viscosity of food. Examples of food products that hydrocolloids are used in may include ice-creams, jams, jellies, gelled desserts, cakes and sweets.

Hydrocolloids are a diverse group of polymers and may include modified cellulose, animal hydrocolloids (such as chitin, chitosan and gelatin), a hemicellulose (such as mannans, D-galactomannans (such as guar gum, locust bean gum and tara gams), xyloglucans, glucomannans, arabinoxylans, β-D-Glucans and arabinogalactans), pectins, modified starches, exudate gums (such as gum Arabic, gum ghatti, gum karaya and gum tragacanth), mucilage gums (such as psyllium gum, yellow mustard mucilage and flaxseed mucilage), fructans and seaweed-isolated ingredients (such as agar, alginates and carrageenan). Hydrocolloids can also be isolated from microbes and include for example, xanthan gum, pullulan, gellan gum, bacterial celluloses, curdlan and dextran. For vegan applications, it is preferred that the hydrocolloid used does not comprise a hydrocolloid of animal origin.

In one embodiment a hydrocolloid may be one or more selected from: a modified cellulose, a hemicellulose, a pectin, a modified starch, an exudate gum, a mucilage gum, a fructan, a seaweed-isolated ingredient or a microbial hydrocolloid, preferably a hydrocolloid is a microbial hydrocolloid or a modified cellulose.

A "modified cellulose" is preferably a cellulose that differs structurally from a natural cellulose. In one embodiment a "modified cellulose" as used herein refers to a natural cellulose that has been chemically modified. In one embodiment a modified cellulose may be one or more selected from: a methylcellulose, a microcrystalline cellulose, or a carboxymethylcellulose, preferably a methylcellulose.

Chemical modifications to natural cellulose may include treating natural cellulose with hydrochloric acid to partially depolymerise cellulose (by hydrolysing its amorphous regions), to form microcrystalline cellulose. Alternatively, carboxymethylcellulose may be formed by reacting cellulose with alkali (alkali cellulose) and then treating with monochloroacetic acid, and methylcellulose may be formed by reacting alkali cellulose with e.g. methyl chloride.

The term "methylcellulose" as used herein may refer to a partially etherified natural cellulose. Methylcellulose may be made using a two-step procedure comprising alkalinization and etherification. In one embodiment a methylcellulose may comprise one or more methoxy (O-CH3) groups. Methylcellulose may have a methoxy content of 25% to 33%, preferably 27.5-31.5%. Methylcellulose may be characterised by its degree of substitution, which refers to the average number of hydroxyl groups per glucose that are substituted by one or more methoxy groups. In one embodiment a methylcellulose may comprise a degree of substitution of between 1.3 and 2.6, preferably between 1.7 to 2.2. Methylcellulose has the E number (European Food Safety Authority EU reference) E461. Methylcellulose is described at https://foodadditives.net/thickeners/methylcellulose/ .

A methylcellulose of the invention may be one that has a viscosity of 320-480 cP, 2% in water at 20°C.

A hemicellulose may be one or more selected from: a mannan, a D-galactomannan, a xyloglucan, a glucomannan, an arabinoxylan, a β-D-Glucan or an arabinogalactan.

A D-galactomannan may be one or more selected from: a guar gum, a locust bean gum or a tara gam.

An exudate gum may be one or more selected from: a gum Arabic, a gum ghatti, a gum karaya or a gum tragacanth.

A mucilage gum may be one or more selected from: a psyllium gum, a yellow mustard mucilage or a flaxseed mucilage.

A seaweed-isolated ingredient may be one or more selected from: agar, an alginate or a carrageenan.

A microbial hydrocolloid may be one or more selected from: a gellan gum, a xanthan gum, a pullulan, a bacterial cellulose, a curdlan or a dextran, preferably a gellan gum.

Hydrocolloids that are involved in the gelation of food products may include, for example agar, alginate, pectin, carrageenan, modified cellulose, gelatin, gellan gum and modified starch. Gelation may involve the cross-linking of polymer chains to form a three-dimensional network that traps or immobilises water and other additives such as solutes and pigments within it as described in Goff and Guo (Handbook of Food Structure Development. 2019 Oct; pp.1-28, Print ISBN 978-1-78801-216-4, PDF elSBN 978-1-78801-615-5, ePub elSBN 978-1-78801-905-7) .

The term "gellan gum" as used herein preferably refers to a polysaccharide comprising (or consisting of) tetrasaccharide repeat units, each containing two D-glucose units, one D-glucuronic acid and one L-rhamnose. A gellan gum may be acylated. For example a gellan gum may comprise two acyl substituents: acetate at C6 and glycerate at C2 on the first glucose unit of the repeating unit of the tetrasaccharide. In some embodiments, on average, there is one glycerate per repeat and one acetate per every two repeats.

The term "high acyl gellan gum" as used herein preferably refers to a gellan gum in which: greater than 50% of the total C6 and C2 positions of the first glucose units of each repeating unit of the tetrasaccharide are acylated; and/or the total acyl content of the gellan gum is >7.35 wt.%. Preferably, a "high acyl gellan gum" as used herein refers to a gellan gum in which: greater than 50% of the total C6 and C2 positions of the first glucose units of each repeating unit of the tetrasaccharide are acylated; and the total acyl content of the gellan gum is >7.35 wt.%.

The term "low acyl gellan gum" as used herein preferably refers to a gellan gum in which: ≤50% of the total C6 and C2 positions of the first glucose units of each repeating unit of the tetrasaccharide are acylated; and/or the total acyl content of the gellan gum is ≤7.35 wt.%. Preferably, a "low acyl gellan gum" as used herein refers to a gellan gum in which: ≤50% of the total C6 and C2 positions of the first glucose units of each repeating unit of the tetrasaccharide are acylated; and the total acyl content of the gellan gum is ≤7.35 wt.%. The term "low acyl gellan gum" also encompasses deacylated gellan gums in which: <1% of the total C6 and C2 positions of the first glucose units of each repeating unit of the tetrasaccharide are acylated; and/or the total acyl content of the gellan gum is <0.15 wt.%. Preferably, in which: <1% of the total C6 and C2 positions of the first glucose units of each repeating unit of the tetrasaccharide are acylated; and the total acyl content of the gellan gum is <0.15 wt.%.

High and low acyl gellan gums are described at https://foodadditives.net/thickeners/gellan-gum/ .

Thus, in one embodiment a gellan gum may be a high acyl gellan gum. In one embodiment, a gellan gum may be a low acyl gellan gum. A composition of the invention employs both a high acyl gellan gum and a low acyl gellan gum. Surprisingly, employing a combination of a high acyl gellan gum and low acyl gellan gum was found to significantly improve functionality of the composition when compared to either gellan gum in isolation. In particular, the low acyl gellan gum may prevent reversal of gelation when the composition cools (e.g. after heating).

Without wishing to be bound by theory, it is believed that there are three different mechanisms in which hydrocolloids undergo gelation, said mechanisms are ionotropic gelation, cold-set gelation and heat-set gelation.

In ionotropic gelation, a hydrocolloid may be able to gel (e.g. gelation may be promoted) in the presence of an ionic crosslinking agent. An "ionic crosslinking agent" as used herein may refer to any crosslinking agent which promotes gelling of a hydrocolloid. In one embodiment an ionic crosslinking agent imparts a function of joining the polymer chains of hydrocolloids together to form a three-dimensional network. Examples of such hydrocolloids (the gelling of which may be promoted by an ionic crosslinking agent) may include, but are not limited to, a low acyl gellan gum, an alginate, a carrageenan, and a low-methoxy pectin, wherein said hydrocolloids may gel in the presence of cations, e.g. Ca²⁺ ions (e.g. provided by as salt described herein) The third hydrocolloid of the present invention may form a gel by ionotropic gelation.

In one embodiment an ionic crosslinking agent strengthens the gel and/or gel brittleness formed by a high acyl gellan gum.

During cold-set gelation, hydrocolloids may be dissolved in warm/boiling water to achieve full dispersion and hydration, and then cooled, leading to the formation of a three-dimensional network. Examples of such hydrocolloids may include agar and gelatin.

During heat-set gelation, hydrocolloid may be heated to disrupt any structure, resulting in subsequent rearrangement into a three-dimensional network. Examples of such hydrocolloids may include but are not limited to, curdlan, glucomannan and modified cellulose (e.g. methylcellulose).

A first hydrocolloid may be suitable for forming a gel when exposed to a temperature of at least 40 °C in the presence of a liquid (preferably water).

In one embodiment a composition of the invention comprises a first hydrocolloid that forms a gel by heat-set gelation when exposed to a temperature of at least 40 °C in the presence of a liquid (preferably water). In one embodiment heat-set gelation may be induced at a temperature of at least 41 °C, 42 °C, 43 °C or 44 °C, preferably wherein heat-set gelation is induced at a temperature of at least 45 °C, more preferably wherein the heat-set gelation is induced at a temperature of at least 47 °C (e.g. at 50 °C). In one embodiment a composition of the invention comprises a first hydrocolloid that forms a gel by heat-set gelation when exposed to a temperature of less than or equal to 80 °C, 75 °C, 70 °C, 69 °C, 68 °C, 67 °C or 66 °C in the presence of a liquid (preferably water), preferably wherein heat-set gelation is induced at a temperature of less than or equal to 64 °C, more preferably wherein heat-set gelation is induced at a temperature of less than or equal to 62 °C (e.g. at 60 °C). In one embodiment a first hydrocolloid forms a gel by heat-set gelation when exposed to a temperature of 35-75 °C in the presence of a liquid (preferably water), preferably 40-70 °C, more preferably 45-65 °C (e.g. 50-60 °C).

In one embodiment the first hydrocolloid is present in the dry composition e.g. at 19.73 or 19.76 wt.%.

In one embodiment the first hydrocolloid is present in the liquid composition e.g. at 1.59 wt.%.

In one embodiment a weight ratio of a first hydrocolloid to legume protein present in a composition of the invention is at least 1:4.12, 1:3.43, 1:2.94 or 1:2.58, preferably at least 1:2.58, more preferably at least 1:2.29. In one embodiment a weight ratio of a first hydrocolloid to legume protein present in a composition is less than or equal to 1:1.37, 1:1.47, 1:1.58 or 1:1.72, preferably less than or equal to 1:1.72, more preferably less than or equal to 1:1.87. In one embodiment a weight ratio of a first hydrocolloid to legume protein present in a composition of the invention is 1:1.37 to 1:4.12, 1:1.47 to 1:3.43, 1:1.58 to 1:2.94 or 1:1.72 to 1:2.58, preferably 1:1.90 to 1:2.32, more preferably 1:1.99 to 1:2.20 (e.g. 1:2.09).

A second hydrocolloid may be suitable for forming a gel when exposed to a temperature of at least 60 °C in the presence of a liquid (preferably water).

In one embodiment a composition of the invention comprises a second hydrocolloid that forms a gel by heat-set gelation when exposed to a temperature of at least 60 °C in the presence of a liquid (preferably water). Thus, in one embodiment a composition of the invention comprises a second hydrocolloid that forms a gel by heat-set gelation when exposed to a temperature of at least 62 °C, 64 °C or 66 °C in the presence of a liquid (preferably water), preferably a temperature of at least 66 °C, more preferably a temperature of at least 68 °C (e.g. 70 °C). In one embodiment a composition of the invention comprises a second hydrocolloid that forms a gel by heat-set gelation when exposed to a temperature of less than or equal to 94 °C, 92 °C, 90 °C, 88 °C, 86 °C or 84 °C in the presence of a liquid (preferably water), preferably a temperature of less than or equal to 84 °C, more preferably a temperature of less than or equal to 82 °C (e.g. 80 °C). In one embodiment a composition of the invention comprises a second hydrocolloid that forms a gel by heat-set gelation when exposed to a temperature of 60-90 °C in the presence of a liquid (preferably water), 62-88 °C, 64-86 °C or 66-84 °C, preferably a temperature of 66-84 °C, more preferably a temperature of 68-82 °C (e.g. 70-80 °C).

In one embodiment the second hydrocolloid is present in the dry composition e.g. at 5.69 wt.%.

In one embodiment the second hydrocolloid is present in the liquid composition e.g. at 0.45 wt.% or 0.46 wt.% .

In one embodiment a weight ratio of a second hydrocolloid to legume protein present in a composition of the invention is at least 1:13.74, 1:11.77, 1:10.30, 1:9.16 or 1:8.24, preferably at least 1:7.49, more preferably at least 1:6.87. In one embodiment a weight ratio of a second hydrocolloid to legume protein present in a composition of the invention is less than or equal to 1:4.12, 1:4.34, 1:4.85 or 1:5.15, preferably less than or equal to 1:5.15, more preferably less than or equal to 1:5.49. In one embodiment a weight ratio of a second hydrocolloid to legume protein present in a composition of the invention is 1:4.12 to 1:13.74, 1:4.34 to 1:8.24, 1:4.44 to 1:8.00 or 1:4.61 to 1:7.49, preferably 1:5.0 to 1:7.49, more preferably 1:5.64 to 1:6.34 (e.g. 1:6.00).

A slightly lower amount of a second hydrocolloid may be employed in a composition comprising a starch (e.g. an added starch). In one embodiment a weight ratio of a second hydrocolloid to legume protein present in a composition of the invention is at least 1:11.18, 1:9.58 or 1:8.38, preferably at least 1:8.38, more preferably at least 1:7.45. In one embodiment a weight ratio of a second hydrocolloid to legume protein present in a composition of the invention is less than or equal to 1:3.35, 1:3.53, 1:3.73, 1:3.95, 1:4.19, 1:4.47 or 1:4.79, preferably less than or equal to 1:4.79, more preferably less than or equal to 1:5.16. In one embodiment a weight ratio of a second hydrocolloid to legume protein present in a composition of the invention is 1:3.73 to 1:16.77, 1:4.53 to 1:7.37 or 1:4.69 to 1:7.03, preferably 1:4.69 to 1:7.03, more preferably 1:5.59 to 1:6.71 (e.g. 1:5.89). Preferably, said weight ratios are the weight ratios of a second hydrocolloid in a composition that comprises a starch (e.g. an added starch).

A hydrocolloid may be classified as a thermo-reversible hydrocolloid when a gel produced by said hydrocolloid can be melted by applying heat. An example of a thermo-reversible hydrocolloid may include a high acyl gellan gum. In contrast, a hydrocolloid may be classified as a thermo-irreversible hydrocolloid when a gel produced by said hydrocolloid cannot be melted by applying heat. An example of a thermo-irreversible hydrocolloid may include a low acyl gellan gum.

A third hydrocolloid may be suitable for forming a gel when contacted with an ionic crosslinking agent in the presence of a liquid (preferably water). Optionally, wherein said hydrocolloid is further exposed to a temperature of at least 70 °C, preferably at least 80 °C, and then wherein the composition drops below 60 °C, 50 °C or 40 °C, preferably drops below 40-60 °C.

In one embodiment a composition of the invention comprises a third hydrocolloid that forms a gel in the presence of a metal cation (e.g. a divalent metal cation provided by a salt of the composition) in the presence of a liquid (preferably water). Said third hydrocolloid may be exposed to a temperature of at least 70 °C, preferably at least 80 °C, and then may form a gel once the temperature of the composition drops below 60 °C, 50 °C or 40 °C, preferably drops below 40-60 °C.

The term "exposed to a temperature" when used in the context of the hydrocolloids of the invention may mean that the composition (and hydrocolloids) reaches a temperature indicated.

Some hydrocolloids undergo syneresis, a process involving contraction of a gel during gelation, accompanied by separation of liquid. Thus, syneresis influences the moisture content of the final food product. Unlike high acyl gellan gums and low acyl gellan gums, methylcellulose may undergo syneresis. Advantageously, the inventors found that by dispelling water, methylcellulose ensures that whilst cooking a composition of the invention (or foodstuff comprising the same), the hydrocolloids can reach the required gelling temperatures without burning the composition (or foodstuff comprising the same).

In one embodiment the third hydrocolloid is present in the dry composition preferably at at least 2.5 wt.%.

In one embodiment the third hydrocolloid is present in the dry composition e.g. at 3.32 wt.%.

In one embodiment the third hydrocolloid is present in the liquid composition at 0.27 wt.% or 0.29 wt.% .

In one embodiment a weight ratio of a third hydrocolloid to legume protein present in a composition of the invention is at least 1:41.21, 1:27.47, 1:20.60, 1:16.48 or 1:13.74 preferably at least 1:13.74, more preferably at least 1:11.77. In one embodiment a weight ratio of a third hydrocolloid to legume protein present in a composition of the invention is less than or equal to 1:5.89, 1:6.34 or 1:6.87, preferably less than or equal to 1:6.87, more preferably less than or equal to 1:7.49. In one embodiment a weight ratio of a third hydrocolloid to legume protein present in a composition of the invention is 1:5.15 to 1:41.21, 1:5.89 to 1:20.60, or 1:6.87 to 1:13.74, preferably 1:6.87 to 1:13.74, more preferably 1:8.77 to 1:10.30 (e.g. 1:9.47).

A slightly lower amount of a third hydrocolloid may be employed in a composition comprising a starch (e.g. an added starch). In one embodiment a weight ratio of a third hydrocolloid to legume protein present in a composition of the invention is at least 1:67.07, 1:33.53, 1:22.36, or 1:16.77, preferably at least 1:16.77, more preferably at least 1:13.41. In one embodiment a weight ratio of a third hydrocolloid to legume protein present in a composition of the invention is less than or equal to 1:5.59, 1:6.10, 1:6.71 or 1:7.45, preferably less than or equal to 1:7.45, more preferably less than or equal to 1:8.38. In one embodiment a weight ratio of a third hydrocolloid to legume protein present in a composition of the invention is 1:6.10 to 1:67.07, preferably 1:6.71 to 1:33.53, more preferably 1:8.38 to 1:16.77 (e.g. 1:10.10). Preferably, said weight ratios are the weight ratios of a third hydrocolloid in a composition that comprises a starch (e.g. an added starch).

In one embodiment a weight ratio of the second hydrocolloid to the third hydrocolloid in a composition of the invention is less than or equal to 1:0.5, 1:0.52, 1:0.54, 1:0.56, 1:058, 1:0.60 or 1:0.61, preferably less than or equal to 1:0.62. In one embodiment a weight ratio of the second hydrocolloid to the third hydrocolloid in a composition of the invention is at least 1:1.21, 1:1.15, 1:1.10, 1:1.05, 1:1.0, 1:0.95, 1:0.90, 1:0.85, 1:0.80, 1:0.75, 1:0.70, 1:0.68 or 1:0.66, preferably at least 1:0.65. In one embodiment a weight ratio of the second hydrocolloid to the third hydrocolloid in a composition of the invention is 1:0.5 to 1:1.3, or 1:0.56 to 1:1.21, preferably 1:0.5 to 1:0.7 (e.g. 1:0.64).

Where a composition comprises a starch, a weight ratio of the second hydrocolloid to the third hydrocolloid employed may be slightly different. In one embodiment a weight ratio of the second hydrocolloid to the third hydrocolloid in a composition of the invention is less than or equal to 1:0.5, 1:0.52, or 1:0.54, preferably less than or equal to 1:0.56. In one embodiment a weight ratio of the second hydrocolloid to the third hydrocolloid in a composition of the invention is at least 1:0.9, 1:0.85, 1:0.8, or 1:0.75, preferably at least 1:0.70, more preferably at least 1:0.65. In one embodiment a weight ratio of the second hydrocolloid to the third hydrocolloid in a composition of the invention is 1:0.35 to 1:0.75, or 1:0.40 to 1:0.70, preferably 1:0.45 to 1:0.65 (e.g. 1:0.58). Preferably, said weight ratio is a weight ratio of the second hydrocolloid to the third hydrocolloid in a dry composition that comprises a starch (e.g. an added starch).

Advantageously, the inventors identified a weight ratio of high acyl gellan gum to low acyl gellan gum which imparts textural properties similar to a chicken egg. Furthermore, the inventors identified that a combination of said hydrocolloids with the hydrocolloid methylcellulose provides stability to the composition at a range of temperatures when cooking, thus enabling a range of downstream food applications to be created from the composition of the invention. For instance, the composition of the invention remained stable whilst cooking at high temperatures and continued to remain stable upon cooling (e.g. when chilling food products).

More preferably:
the second hydrocolloid is present in a liquid composition at 0.4-0.5 wt.%; and
a weight ratio of the second hydrocolloid to the third hydrocolloid in said composition is 1:0.5 to 1:1.3, or 1:0.56 to 1:1.21, preferably 1:0.5 to 1:0.7.

More preferably:
the second hydrocolloid is present in the dry composition comprising starch at 5-6 wt.%; and
a weight ratio of the second hydrocolloid to the third hydrocolloid in said composition is 1:0.35 to 1:0.75, or 1:0.40 to 1:0.70, preferably 1:0.45 to 1:0.65.

More preferably:
the second hydrocolloid is present in a liquid composition comprising starch at 0.4-0.5 wt.%; and
a weight ratio of the second hydrocolloid to the third hydrocolloid in said composition is 1:0.35 to 1:0.75, or 1:0.40 to 1:0.70, preferably 1:0.45 to 1:0.65.

A salt referred to herein may be one that functions as an ionic crosslinking agent (e.g. crosslinks (e.g. promotes crosslinking of) at least one of the hydrocolloids present in the composition, such as the third hydrocolloid) in the presence of a liquid (preferably water). The salt may have a monovalent or a divalent cation and an anion, preferably a divalent cation. Suitable, cations may include calcium (Ca²⁺), magnesium (Mg²⁺), sodium (Na⁺), potassium (K⁺), and/or acid (H⁺). In one embodiment a salt comprises an anion, wherein the anion is one or more selected from the group consisting of: lactate anion, chloride anion, gluconate anion, propionate anion and/or a phosphate anion. In one embodiment the salt is one or more selected from the group consisting of: calcium lactate, chloride, magnesium lactate, propionate and/or gluconate. Preferably, the salt is calcium lactate. In the presence of liquid, the salt suitably dissociates to release its cation and anion. The cation may then be able to interact with a hydrocolloid of the invention (e.g. via regions of negative charge of the polysaccharide) thereby promoting formation a three-dimensional network.

For example, the salt may be present in the dry composition e.g. at 4.64 wt.%.

The salt may be present in the dry composition at less than or equal to 4.5 wt.%, 4 wt.%, or 3.5 wt.%.

In one embodiment the salt is present in the liquid composition e.g. at 0.37 wt.% or 0.40 wt.% .

In one embodiment a weight ratio of a salt (e.g. calcium lactate) to legume protein present in a composition of the invention is at least 1:41.21. A weight ratio of a salt (e.g. calcium lactate) to legume protein present in a composition of the invention may be at least 1:20.60, 1:16.48, 1:13.74, 1:11.77 or 1:10.30, preferably at least 1:10.30, more preferably at least 1:8.24. In one embodiment a weight ratio of a salt (e.g. calcium lactate) to legume protein present in a composition of the invention is less than or equal to 1:4.12. A a weight ratio of a salt (e.g. calcium lactate) to legume protein present in a composition of the invention may be less than or equal to 1:4.58, 1:4.85 or 1:5.15, preferably less than or equal to 1:5.15, more preferably less than or equal to 1:5.89. In one embodiment a weight ratio of a salt (e.g. calcium lactate) to legume protein present in a composition of the invention is 1:4.12 to 1:20.60. For example, a weight ratio of a salt (e.g. calcium lactate) to legume protein present in a composition of the invention may be 1:4.58 to 1:13.74, preferably 1:5.15 to 1:10.30, more preferably 1:5.89 to 1:8.24 (e.g. 1:6.78).

A slightly lower amount of a salt (e.g. calcium lactate) may be employed in a composition comprising a starch (e.g. an added starch). In one embodiment a weight ratio of a salt (e.g. calcium lactate) to legume protein present in a composition of the invention is at least 1:33.53. A weight ratio of a salt (e.g. calcium lactate) to legume protein present in a composition of the invention may be at least 1:16.77 or 1:13.41, preferably at least 1:13.41, more preferably at least 1:11.18. In one embodiment a weight ratio of a salt (e.g. calcium lactate) to legume protein present in a composition of the invention is less than or equal to 1:3.35. A weight ratio of a salt (e.g. calcium lactate) to legume protein present in a composition of the invention may be less than or equal to 1:3.73, 1:4.19 or 1:4.79 or preferably less than or equal to 1:4.79, more preferably less than or equal to 1:5.59. In one embodiment a weight ratio of a salt (e.g. calcium lactate) to legume protein present in a composition of the invention is 1:4.19 to 1:33.53. For example, a weight ratio of a salt (e.g. calcium lactate) to legume protein present in a composition of the invention may be 1:4.47 to 1:22.36, or 1:4.79 to 1:16.77, preferably 1:4.79 to 1:16.77, more preferably 1:5.59 to 1:11.18 (e.g. 1:7.23). Preferably, said weight ratios are the weight ratios of a salt (e.g. calcium lactate) in a composition that comprises a starch (e.g. an added starch).

Conventional chicken egg replacement products on the market may contain carrageenan, which is suspected/believed to be a carcinogenic ingredient. The term "carrageenan" as used herein to refer to a mixture of polysaccharides of the family *Rhodophyta.* Carrageenan may be a mixture of polysaccharides of the genus *Eucheuma*, *Chondrus*, *Gigartina Iridaea, Hypnea, Solieria, Agardhiella,* and *Sarconema,* preferably *Chondrus*. Preferably, a carrageenan is a mixture of polysaccharides from *Chondrus crispus*.

Thus, in one embodiment the dry composition or liquid composition does not comprise carrageenan.

In one embodiment a composition of the invention comprises an additional protein. An additional protein may be one or more selected from the family: *Salanaceae*, *Fabaceae*, *Brassicaceae*, *Apiaceae*, *Alliaceae*, *Amaranthaceae*, *Cucurbitaceae*, *Asteraceae*, *Poaceae* or *Polygonaceae*. A protein may be from a fruit, for example from a berry, pome, drupe, citrus, melon or tropical fruit.

In one embodiment, a composition of the invention does not comprise a protein in addition to a legume protein. In other words, in one embodiment, the composition of the invention does not comprise a non-legume protein.

In one embodiment a composition of the invention further comprises an emulsifier, wherein the emulsifier is one or more selected from the group consisting of starch (e.g. maize starch), gum, lecithin, fibre (e.g. citrus fibre), glycerine, carrageenan, canola oil, agar, and/or modified cellulose.

The term "emulsifier" may refer to a substance that functions to stabilise and hold together ingredients in a food product that normally would not combine. For example, due to the hydrophobic properties of oil, oil does not combine with water. However, in the presence of an emulsifier, the water and oil can combine.

In one embodiment the gum comprises gum Arabic, guar gum or xanthan gum. In one embodiment the modified cellulose comprises microcrystalline cellulose, carboxymethylcellulose, and/or hydroxypropyl methylcellulose. In a preferred embodiment the emulsifier comprises guar gum, carboxymethylcellulose (E466), and dextrose (e.g. as a carrier).

In one embodiment the emulsifier (e.g. comprising guar gum, carboxymethylcellulose, and dextrose) is present in the dry composition at 0.05-0.80 wt.%, preferably at 0.10-0.75 wt.%, more preferably at 0.50-0.70 wt.% (at 0.61 wt.%). When the dry composition comprises a starch, the emulsifier may be present at 0.15-0.35 wt.% (e.g. at 0.23 wt.%).

In one embodiment the emulsifier (e.g. comprising guar gum, carboxymethylcellulose and dextrose) is present in the liquid composition at 0.005-0.055 wt.%, preferably 0.010-0.050 wt.%, more preferably at 0.035-0.045 wt.% (e.g. at 0.04 wt.%). When the liquid composition comprises a starch, the emulsifier may be present at 0.015-0.025 wt.% (e.g. at 0.02 wt.%)

In one embodiment cream of tartar is present in the dry composition at 0.5-2 wt.%, preferably at 0.7-1.8wt.%, more preferably at 1.0-1.8 wt.% (e.g. at 1.37 wt.%). When the dry composition comprises a starch, cream of tartar may be present at 0.8-1.5 wt.% (e.g. at 1.16 wt.%).

In one embodiment cream of tartar is present in the liquid composition at 0.01-0.17 wt.%, preferably at 0.03-0.15 wt.%, more preferably at 0.05-0.13 wt.% (0.09 wt.%).

Various flavours and/or colours may be present in a composition of the invention to modify and enhance the organoleptic properties of said composition (or a foodstuff comprising the same). The term "organoleptic properties" as used herein refers to sensory properties, such as texture, taste, smell, sight, and/or touch (preferably texture).

The person skilled in the art is aware of suitable flavours for use in a chicken egg-replacement product. Thus, a composition may comprise a flavouring. Thus, in one embodiment a composition of the invention further comprises a flavouring. In one embodiment the flavouring is one or more selected from the group consisting of salt, egg flavouring (e.g. having a sulphurous compound), spices, yeast extracts and/or nutritional yeast. A flavouring may comprise a salt, wherein said salt is additional to any salt that functions as a crosslinking agent. In one embodiment, the salt further comprises sulphur. In a preferred embodiment, the salt is black salt. In one embodiment, the flavouring comprises nutritional yeast and black salt.

The term "yeast extract" as used herein may refer to any yeast product produced by removal of the cell wall of yeast and recovery of the intracellular content. The term "nutritional yeast" refers to yeast that has been deactivated by heat during its manufacturing process.

In one embodiment the yeast extract is present in the dry composition at 1-9 wt.%, or 2-8 wt.%, preferably at 3-7 wt.%, more preferably at 4-6 wt.% (e.g. at 4.36 wt.% or 5.71 wt.%).

In one embodiment the yeast extract is present in the liquid composition at 0.10-0.60 wt.%, or 0.15-0.55 wt.%, preferably at 0.20-0.50 wt.%, more preferably at 0.30-0.45 wt.% (e.g. at 0.35 wt.% or 0.38 wt.%).

The term "black salt" (also termed as "kala namak") as used herein may refer to a volcanic rock salt comprising sodium chloride and traces of sulphur.

In one embodiment the black salt is present in the dry composition at 0.5-2.7 wt.%, or 0.7-2.5 wt.%, preferably at 0.9-2.3 wt.%, more preferably at 1.1-2.1 wt.% (e.g. at 1.46 wt.% or 1.91 wt. %).

In one embodiment the black salt is present in the liquid composition at 0.05-0.19 wt.%, or 0.06-0.18 wt.%, preferably at 0.07-0.17 wt.%, more preferably at 0.08-0.16 wt.% (e.g. at 0.12 wt.% or 0.13 wt.%).

In one embodiment the egg flavouring is present in the dry composition at 1-6.5 wt.%, 1.5-6 wt.%, or 2-5.5 wt.%, preferably at 2.5-5 wt.%, more preferably at 3-4.5 wt.% (e.g. at 3.71 wt.%).

In one embodiment the egg flavouring is present in the liquid composition at 0.05-0.55 wt.%, 0.10-0.50 wt.%, or 0.15-0.45 wt.%, preferably at 0.20-0.40 wt.%, more preferably at 0.25-0.35 wt.% (e.g. at 0.30 wt.%).

In one embodiment a composition of the invention further comprises one or more vitamins. For example, one or more vitamins may include vitamin A, vitamin B (including B-1, B-2, B-3, B-5, B-6, B-7, B-9 and B-12), vitamin C, vitamin D, vitamin E, vitamin K and/or folic acid. In a preferred embodiment the one or more vitamins comprise vitamin B12 and vitamin D.

In one embodiment the vitamin (e.g. total vitamin content) is present in the dry composition at 0.1-1.2 wt.%, preferably 0.2-1.1 wt.%, more preferably 0.4-0.9 wt.% (e.g. at 0.58 wt.% or 0.76 wt. %).

In one embodiment the vitamin (e.g. total vitamin content) is present in the liquid composition at 0.01-0.1 wt.%, preferably 0.02-0.09 wt.%, more preferably 0.03-0.07 wt.% (e.g. at 0.05 wt. %).

A composition of the invention may be enriched and/or fortified. For example, the composition may comprise calcium, magnesium, iron, copper, iodine, zinc, manganese, sodium, potassium and/or selenium. Said enricher/fortifier is preferably calcium carbonate.

A composition of the invention comprises calcium carbonate. Advantageously, calcium carbonate improves one or more organoleptic properties of the composition, for example by providing a plant milk creaminess to the composition (e.g. a foodstuff prepared from said composition).

In one embodiment a calcium carbonate is present in the dry composition e.g. at 0.93 wt.%.

In one embodiment a calcium carbonate is present in the liquid composition e.g. at 0.07 wt.% .

In one embodiment a weight ratio of calcium carbonate to legume protein present in a composition of the invention is 1:20.96 to 1:167.66, preferably 1:23.95 to 1:83.83, more preferably 1:27.94 to 1:55.89 (e.g. 1:36.06).

A composition of the invention may comprise a colouring agent. Colouring agents may be artificial colourants (including erythrosine, sunset yellow, tartrazine, ponceau) or natural colourants (including paprika, annatto, caramel, carotene), although it is preferred that colouring agents from animal sources (e.g. carmine) are not included. In a preferred embodiment the colouring agent is one or more selected from the group consisting of: erythrosine, sunset yellow, tartrazine, ponceau, paprika, annatto, caramel or beta carotene, preferably wherein the colouring agent is beta carotene.

In one embodiment the colouring agent may be present in the dry composition at 0.3-1.9 wt.%, preferably at 0.5-1.7 wt.%, more preferably at 0.7-1.5 wt.% (e.g. at 0.93 wt.% or 1.22 wt.%).

In one embodiment the colouring agent may be present in the liquid composition at 0.01-0.14 wt.%, preferably at 0.03-0.12 wt.%, more preferably at 0.05-0.10 wt.% (e.g. at 0.07 wt.% or 0.08 wt.%).

Masking agents may be used in food products to complement, enhance or modify the flavour within the food product but without imparting the flavour of the masking agent itself. Thus, in one embodiment a composition of the invention further comprises a masking agent. Masking agents may include coffee, caramel, chocolate, vanilla or dairy masking agents

In one embodiment the masking agent is present in the dry composition at 1-4 wt.%, preferably at 1.5-3.5 wt.%, more preferably at 2-3 wt.% (e.g. at 2.20 wt.% or 2.89 wt.).

In one embodiment the masking agent is present in the liquid composition at 0.05-0.31 wt.%, preferably at 0.10-0.28 wt.%, more preferably at 0.15-0.23 wt.% (e.g. at 0.18 wt.% or 0.19 wt. %).

In one embodiment a composition of the invention is a chicken egg-replacement composition. A chicken egg-replacement composition is substantially free of any component of a chicken egg. The term "substantially free" as used in this context means that the composition comprises less than 0.01, 0.001 or 0.0001 wt.% of chicken egg components. Preferably, a chicken egg-replacement composition comprises 0 wt.% of chicken egg components.

A composition of the invention comprises a starch. The starch may be present at an amount that increases yield of the final product and results in a smoother texture and improved flavour when compared to a chicken egg. The term "starch" as used herein refers to a polysaccharide isolated from plants and comprising repeating units of glucose.

A starch may be one or more selected from the family: *Salanaceae*, *Fabaceae*, *Brassicaceae*, *Apiaceae*, *Alliaceae*, *Amaranthaceae*, *Cucurbitaceae*, *Asteraceae*, *Poaceae* or *Polygonaceae,* preferably *Fabaceae*.

A starch may be a starch of the plant genus *Phaseolus, Cicer, Lathyrus, Lens, Pisum, Vicia, Abrus, Lablab, Glycine, Vigna,* or *Ceratonia* preferably of the plant genus *Pisum*.

A starch may be a starch of the plant species *Phaseolus vulgaris*, *Phaseolus lunatus*, *Phaseolus coccineus, Cicer arietinum, Lathyrus japonicus, Lathyrus odoratus, Lens culinaris, Pisum sativum, Vicia faba, Abrus precatorius, Lablab purpureus, Glycine max, Vigna radiata, Vigna unguiculata,* or *Ceratonia siliqua, preferably Pisum sativum*.

A starch may be a golden pea starch or a split pea starch. Preferably a starch of the invention is a yellow split pea starch. Thus, a pea starch of the invention may be a yellow split pea starch and a pea starch isolate may be a yellow split pea starch isolate.

Advantageously, starch improves water retention of the composition, thereby allowing for a greater powder to water ratio without adversely affecting viscosity. Alternatively/additionally, the legume starch may improve texture, gelling, and/or yield of the composition (e.g. when cooked).

In one embodiment the starch in the composition is in addition to any starch that may be present in negligible amounts in other ingredients of the composition (e.g. in a legume protein isolate, methylcellulose, and/or a gellan gum). Thus, a starch is preferably an added starch.

In one embodiment the starch (e.g. legume starch) is present in the dry composition e.g. at 11.60 wt.%.

In one embodiment the starch (e.g. legume starch) is present in the liquid composition e.g. at 0.94 wt % .

In one embodiment a weight ratio of a starch to legume protein present in a composition of the invention is at least 1:16.77, 1:8.38, or 1:5.59, preferably at least 1:4.19, more preferably at least 1:3.35. In one embodiment a weight ratio of a starch to legume protein present in a composition of the invention is less than or equal to 1:1.52, 1:1.60, 1:1.68, 1:1.76, 1:1.86, 1:1.97, 1:2.10, or 1:2.24 preferably less than or equal to 1:2.40, more preferably less than or equal to 1:2.58. In one embodiment a weight ratio of a starch to legume protein present in a composition of the invention is 1:1.52 to 1:16.77, 1:1.68 to 1:8.38, 1:1.86 to 1:5.59, or 1:2.10 to 1:4.19, more preferably 1:2.40 to 1:3.35 (e.g. 1:2.89).

The amount referred to above may refer to the amount of a starch isolate present in a composition of the invention. Said starch isolate may comprise starch at 99 wt.% (+/-1 wt.%).

A composition of the invention may comprise lipids. Lipids may be provided by way of an edible lipid composition. Thus, in one embodiment a composition of the invention comprises a lipid composition. The lipid composition may further comprise lecithin. Advantageously, said lipid composition may prevent the food product from burning during the process of gelation (e.g. while at the same time preventing syneresis of the hydrocolloids, thereby improving yield). Thus, said lipid composition may be present at an amount to prevent the food product from burning during the process of gelation. Additionally or alternatively, the lipid composition may help create a smooth texture, improved mouthfeel, reduce aeration of methylcellulose when present in a composition of the invention, and/or improve the nutritional quality of the composition by providing fat and/or lecithin (resulting in a composition that is more similar to a chicken egg).

The lipid composition is preferably from a plant, for example from a vegetable, nut, or seed of a plant. The lipid composition is preferably an oil. In one embodiment the lipid composition is a rapeseed, coconut, cottonseed, castor oil, corn, olive, palm, peanut, safflower, sesame, soybean, sunflower, almond, beech nut, brazil nut, cashew, hazelnut, macadamia, mongongo nut, pecan, pine nut, pistachio, walnut, pumpkin seed, flaxseed, cocoa, or hemp lipid composition (e.g. oil). In a particularly preferred embodiment the lipid composition is a corn oil.

In one embodiment the lipid composition provides a source of lipids in addition to any negligible amounts of lipids that may be present in other ingredients of the composition (e.g. in legume protein isolate). Thus, the lipid composition is preferably an added lipid composition.

In one embodiment a lipid composition is present in the liquid composition e.g. at 1.97 wt.%.

In one embodiment, the liquid, wherein the liquid is a combination of water and a lipid composition, is present in the liquid composition more preferably at 91-93 wt.% (e.g. at 91.81 wt.%).

In one embodiment the liquid, wherein the liquid is a combination of lactic acid, water and a lipid composition, is present in the liquid composition more preferably at at least 90 wt.%. In one embodiment the liquid, wherein the liquid is a combination of lactic acid, water and a lipid composition, may be present in the liquid composition more preferably at less than or equal to 93 wt.%. In one embodiment, the liquid, wherein the liquid is a combination of lactic acid, water and a lipid composition, is present in the liquid composition more preferably at 91-93 wt.% (e.g. at 91.93 wt.%).

A dry composition comprising a starch (and calcium carbonate as claimed) comprises:

| **Ingredient** | **wt.%** |
|---|---|
| A pea protein (preferably provided by a pea protein isolate) | 30-35 wt.% |
| A starch ( a pea starch) | 10-14 wt.% |
| A first hydrocolloid ( a methylcellulose) | 18.7-20.7 wt.% |
| A second hydrocolloid ( a high acyl gellan gum) | 5-6 wt.% |
| A third hydrocolloid ( a low acyl gellan gum) | 2-4 wt.% |
| A salt ( a calcium lactate) | 3-6 wt.% |

The above dry compositions comprising a starch (and calcium carbonate as claimed) may further comprise one or more (preferably all) of the following:

| **Ingredient** | **wt.%** |
|---|---|
| Nutritional Yeast | 1-9 wt.%, preferably 3-7 wt.%, more preferably 4-6 wt.% |
| Black Salt | 0.5-2.7 wt.%, preferably 0.9-2.3 wt.%, more preferably 1.1-2.1 wt.% |
| A colouring agent (preferably beta carotene) | 0.3-1.9 wt.%, preferably 0.5-1.7 wt.%, more preferably 0.7-1.5 wt.% |
| A vitamin (preferably a combination of vitamins B12 and vitamin D) | 0.1-1.2 wt.%, preferably 0.2-1.1 wt.%, more preferably 0.4-0.9 wt.% |
| Masking agent | 1-4 wt.%, preferably 1.5-3.5 wt.%, more preferably 2-3 wt.% |
| Cream of Tartar | 0.5-2 wt.%, preferably 0.7-1.8 wt.%, more preferably 0.8-1.5 wt.% |
| An emulsifier (e.g. comprising guar gum, carboxymethylcellulose and dextrose) | 0.05-0.80 wt.%, preferably 0.10-0.75 wt.%, more preferably 0.15-0.35 wt.% |
| Flavouring (e.g. egg flavouring) | 1-6.5 wt.%, preferably 2.5-5 wt.%, more preferably 3-4.5 wt.% |

A liquid composition comprising starch (and calcium carbonate as claimed) comprises:

| **Ingredient** | **wt.%** |
|---|---|
| A pea protein (preferably provided by a pea protein isolate) | 2-3 wt. % |
| A starch ( a pea starch) | 0.6-1.2 wt.% |
| A first hydrocolloid ( a methylcellulose) | 1.51-1.67 wt.% |
| A second hydrocolloid ( a high acyl gellan gum) | 0.4-0.5 wt.% |
| A third hydrocolloid ( a low acyl gellan gum) | 0.20-0.34 wt.% |
| A salt ( a calcium lactate) | 0.30-0.45 wt.% |
| A lipid composition ( vegetable oil) | 1.5-2.5 wt.% |
| Water | 88-91 wt.% |

The above liquid compositions comprising starch (and calcium carbonate as claimed) may further comprise one or more (preferably all) of the following:

| **Ingredient** | **wt.%** |
|---|---|
| Nutritional Yeast | 0.10-0.60 wt.%, preferably 0.20-0.50 wt.%, more preferably 0.30-0.45 wt.% |
| Black Salt | 0.05-0.19 wt.%, preferably 0.07-0.17 wt.%, more preferably 0.08-0.16 wt.% |
| A colouring agent (preferably beta carotene) | 0.01-0.14 wt.%, preferably 0.03-0.12 wt.%, more preferably 0.05-0.10 wt.% |
| A vitamin (preferably a combination of vitamins B12 and vitamin D) | 0.01-0.1 wt.%, preferably 0.02-0.09 wt.%, more preferably 0.03-0.07 wt.% |
| Masking agent | 0.05-0.31 wt.%, preferably 0.10-0.28 wt.%, more preferably 0.15-0.23 wt.% |
| Cream of Tartar | 0.01-0.17 wt.%, preferably 0.03-0.15 wt.%, more preferably 0.05-0.13 wt.% |
| An emulsifier (e.g. comprising guar gum, carboxymethylcellulose and dextrose) | 0.005-0.055 wt.%, preferably 0.010-0.050 wt.%, more preferably 0.015-0.025 wt.% |
| An acid (e.g. lactic acid) | 0.02-0.22 wt.%, preferably 0.06-0.18 wt.%, more preferably 0.08-0.16 wt.% |

| | |
|---|---|
| Flavouring (e.g. egg flavouring) | 0.05-0.55 wt.%, preferably 0.20-0.40 wt.%, more preferably 0.25-0.35 wt.% |

Where water is mentioned in the above tables, it preferably excludes any water present in an acid, e.g. lactic acid.

Described herein is a method for manufacturing a dry composition for human consumption, the method comprising admixing:
(a) a legume protein;
(b) a first hydrocolloid;
(c) a second hydrocolloid, wherein the second hydrocolloid is different to the first hydrocolloid;
(d) a third hydrocolloid, wherein the third hydrocolloid is different to the first and second hydrocolloids; and
(e) a salt.

Described herein is a method for manufacturing a dry composition comprising admixing:
(a) a legume protein;
(b) a first hydrocolloid, wherein the first hydrocolloid is a methylcellulose;
(c) a second hydrocolloid, wherein the second hydrocolloid is a high acyl gellan gum;
(d) a third hydrocolloid, wherein the third hydrocolloid is a low acyl gellan gum; and
(e) a salt.

Described herein is a method for manufacturing a dry composition comprising admixing:
(a) a legume protein;
(b) a first hydrocolloid, wherein the first hydrocolloid is a methylcellulose;
(c) a second hydrocolloid, wherein the second hydrocolloid is a high acyl gellan gum;
(d) a third hydrocolloid, wherein the third hydrocolloid is a low acyl gellan gum;
(e) a starch (e.g. a legume starch) and/or an enricher/fortifier (e.g. calcium carbonate); and
(f) a salt.

Described herein is a method for manufacturing a dry composition comprising admixing:
(a) a legume protein;
(b) a first hydrocolloid, wherein the first hydrocolloid is a methylcellulose;
(c) a second hydrocolloid, wherein the second hydrocolloid is a high acyl gellan gum;
(d) a third hydrocolloid, wherein the third hydrocolloid is a low acyl gellan gum;
(e) a starch (e.g. a legume starch); and
(f) a salt.

The term "admixing" as used herein means the mixing of at least one ingredient with one or more further ingredient(s). The term "admixing" as used herein refers to mixing constituents in any order, including mixing sequentially or simultaneously. Suitably the term "admixing" may refer to the sequential mixing of constituents. The mixture obtained by admixing may be referred to herein as an "admixture".

In a method of manufacturing a dry composition, the amounts of the various constituents employed are suitably the same as described herein for a dry composition.

Described herein is a method for manufacturing a liquid composition for human consumption, the method comprising:
(a) contacting a liquid having a pH of less than 4.9 with at least:
   (i) a legume protein;
   (ii) a first hydrocolloid;
   (iii) a second hydrocolloid, wherein the second hydrocolloid is different to the first hydrocolloid;
   (iv) a third hydrocolloid, wherein the third hydrocolloid is different to the first and second hydrocolloids; and
   (v) a salt; and
(b) mixing, thereby providing the liquid composition.

Described herein is a method of manufacturing a liquid composition comprising:
(a) contacting a liquid having a pH of less than 4.9 with at least:
   (i) a legume protein;
   (ii) a first hydrocolloid, wherein the first hydrocolloid is a methylcellulose;
   (iii) a second hydrocolloid, wherein the second hydrocolloid is a high acyl gellan gum; and
   (iv) a third hydrocolloid, wherein the third hydrocolloid is a low acyl gellan gum;
   (v) one or more ingredient selected from: a starch, a lipid composition, and/or an enricher/fortifier (e.g. calcium carbonate); and
   (vi) a salt; and
(b) mixing, thereby providing the liquid composition.

Described herein is a method of manufacturing a liquid composition comprising:
(a) contacting a liquid having a pH of less than 4.9 with at least:
   (i) a legume protein;
   (ii) a first hydrocolloid, wherein the first hydrocolloid is a methylcellulose;
   (iii) a second hydrocolloid, wherein the second hydrocolloid is a high acyl gellan gum; and
   (iv) a third hydrocolloid, wherein the third hydrocolloid is a low acyl gellan gum;
   (v) a salt; and
(b) mixing, thereby providing the liquid composition.

Advantageously, using a pH of less than 4.9 prevents growth of pathogens in the composition (e.g. *Clostridium botulinum*). The liquid may comprise water, oil, or a combination thereof. The liquid may have a pH of less than 4.0, e.g. a pH of 2.5-4.0 (preferably 3.1-3.7). The pH of the liquid may be adjusted by increasing an amount of acid (e.g. lactic acid present).

In a method of manufacturing a liquid composition, the amounts of the various constituents employed are suitably the same as described herein for a liquid composition (once all the ingredients have been contacted with the liquid).

The method preferably comprises contacting a dry composition herein with a liquid.

A first hydrocolloid (e.g. methylcellulose) may be hydrated before use in a method of manufacturing a liquid composition. Said first hydrocolloid may be hydrated using any suitable aqueous solution, e.g. water.

The mixing may be to a viscosity of 14-19 (14-19 cm). Preferably, mixing may be to a viscosity of 17-19, e.g. 18.

The term "viscosity" as used in this context refers to the viscosity of a solution when measured using the "Bostwick protocol", with the viscosity value being a value in cm determined according to said protocol.

The "Bostwick protocol" is carried out at 20 °C by:
a) placing a Bostwick consistometer on a countertop and levelling lengthwise and width-wise (by altering the screws of the Bostwick consistometer and using its in-built spirit level);
b) checking that the gate of the Bostwick consistometer is closed and locked in place;
c) taking a temperature reading of a sample from the liquid composition (to ensure that the temperature of the sample is 19-21°C);
d) stirring the sample of the liquid composition and placing said sample into the reservoir of the Bostwick consistometer (where the sample was contained by the gate of the Bostwick consistometer) and levelling off the sample;
e) opening the gate of the Bostwick consistometer and simultaneously starting a countdown timer for 30 seconds;
f) at 30 seconds, measuring the flow (in cm) of the sample of the liquid composition across the trough (using the in-built labelled cm gradations); and
g) repeating the measurement, wherein a successful reading is confirmed when both measurements for each sample are within 0.5 cm of each other.

The mixing step of a method of the invention may be carried out at a defined shear rate. The skilled person is aware of shear rates and how to calculate them. For example, the following formula may be used: *y = V*/*x* for shear rate, where *y* is in units of s⁻¹, *V* s the velocity of the moving layer, and *m* is the distance between the layers *m* in meters.

The ingredients of the composition may be contacted with a liquid gradually over a defined time period. During said time, the liquid may be undergoing mixing at a shear rate described herein. For example, the total amount of the ingredients of the composition may be added to a liquid over a time period of 1-10 minutes or 1-7 minutes, preferably at a time of less than or equal to 6 minutes or 5 minutes (e.g. less than or equal to 4 minutes 45 seconds).

The mixing may be performed at a shear rate of 70,200 s⁻¹ to 85,800 s⁻¹.

The shear rate may be 74,100 s⁻¹ to 81,900 s⁻¹. Preferably, the shear rate is 78,000 s⁻¹.

Total mixing time at said shear rate from the first ingredients contacting the water may be controlled. Said total mixing time may be 1.5-12 minutes, preferably less than or equal to 7 minutes, more preferably less than or equal to 6 minutes and 15 seconds (e.g. 1.5 minutes to 6 minutes and 15 seconds).

Once the total amount of all of the ingredients of the composition of the invention have been contacted with the liquid, the mixture may be mixed at said shear rate for 30 seconds to 2 minutes. Preferably, the mixing is performed for 1 minute to 2 minutes. More preferably, the mixing is performed for 1 minute 30 seconds. Said mixing time is preferably not in addition to the total mixing time provided above and may simply ensure that all of the ingredients have been exposed to at least the mixing time stated. However, if the viscosity of the liquid composition is not at 14-19 following said mixing time, additional mixing may be performed (e.g. for less than or equal to 45 seconds, e.g. less than or equal to 30 seconds).

Mixing may be carried out using a rotor operating at 2000-4000 rpm, preferably 2500-3500 rpm (e.g. at 3000 rpm). During mixing, the rotor may operate at 10-25 m/s, preferably 15-20 m/s (e.g. at 17.95 m/s).

When contacting a liquid with the ingredients present in a composition of the invention, the water may be at a temperature of 1-18 °C or 1-10 °C, preferably 2-7 °C. Once all ingredients have been contacted with the liquid, the temperature of the mixture may be 2-18 °C, preferably 5-15 °C. In other words, mixing may be carried out at 2-18 °C, preferably 5-15 °C.

The liquid may comprise lactic acid (e.g. added as a liquid) and/or potassium bitartrate (e.g. added as a solid), preferably lactic acid and potassium bitartrate.

Addition of the ingredients of the composition to the liquid may increase the pH. Thus, the pH of the liquid composition may be checked following any mixing step and adjusted to a pH of less than or equal to 4.9, preferably 4.75-4.9.

Thus, in one embodiment a liquid composition of the invention has a pH of less than or equal to 4.9, e.g. pH 4.0-4.9, preferably a pH of 4.75-4.9.

The method of manufacturing may further comprise packaging the liquid composition.

The composition may be pasteurized, for example cold pasteurized or high pressure processed (HPP), preferably high pressure processed.

Routine food technology equipment may be used to prepare the dry composition and/or liquid composition of the invention. Said equipment may include for example, a food hopper, mixer, blender and water tank. For example, dry ingredients can be homogenised using a blender before being placed into a food hopper for regular dispersal into a water tank.

Described herein is a dry composition obtainable by the method of manufacturing a dry composition for human consumption described herein.

The term "obtainable" as used herein also encompasses the term "obtained". In one embodiment the term "obtainable" means obtained.

Described herein is a liquid composition obtainable by the method of manufacturing a liquid composition described herein.

In one aspect, there is provided a liquid composition obtainable by hydrating a dry composition of the invention.

Advantageously, unlike current chicken egg-replacement compositions, which need to be used immediately upon hydration into their liquid form, the liquid composition of the invention can be prepared from the dry composition of the invention and used until required. Furthermore, the dry composition and liquid composition of the invention may be freeze-thaw stable. Thus, unlike current chicken egg-replacement compositions on the market, the liquid composition of the invention may have an improved shelf life (e.g. typically in the range of 40-70 days) with no compromise to food safety and stability.

In one embodiment the liquid composition of the invention has a shelf life of at least 40 days, 45 days, 50 days, 55 days, 60 days, 65 days or 70 days, preferably 70 days.

In one embodiment the liquid composition of the invention has a shelf life of less than 90 days, 85 days, 80 days, 75 days or 70 days, preferably 70 days.

Miscellaneous materials, such as sugar, additional salts (sodium chloride, potassium chloride, and others), other flavouring agents, other vitamins and minerals, oils, butylated hydroxytoluene and other preservatives, packaging agents such as anti-clumping agents, and other materials may also be present. The skilled practitioner will be able to identify other constituents that are well-known in, and compatible with, compositions/products in general and the composition/product of the invention in particular, and will be able to determine the correct quantity for use with the embodiments of the invention.

In one aspect the invention provides a method for manufacturing a foodstuff, the method comprising:
(a) admixing a dry composition or a liquid composition of the invention with a food ingredient and optionally cooking; or
(b) cooking a liquid composition of the invention.

In one aspect the invention provides a foodstuff:
comprising a dry composition or a liquid composition of the invention and optionally a food ingredient.

The term "foodstuff" as used herein is used interchangeably with the term "food product" and refers to a variety of products that can be produced when using the dry or liquid composition of the invention. A foodstuff may include for example, an emulsion (such as a dressing, a mayonnaise, a salad dressing, a sauce such as Hollandaise sauce), a baked product (such as a cake, a sponge, a soufflé, a Yorkshire pudding, a bread), a custard, a cooked egg (such as a scrambled egg, a tortilla, a frittata, an omelette), an ice cream, a pastry (such as a quiche), a pasta dish or a fried product (such as donuts, pancakes, waffles, tempura) or a batter. Preferably, the foodstuff is a scrambled egg or baked egg (more preferably a scrambled egg).

Embodiments related to the various compositions of the invention are intended to be applied equally to the dry or liquid composition, and the methods, and *vice versa*.

Unless defined otherwise, all technical and scientific terms used herein have the same meaning as commonly understood by one of ordinary skill in the art to which this disclosure belongs.

This disclosure is not limited by the exemplary methods and materials disclosed herein, and any methods and materials similar or equivalent to those described herein can be used in the practice or testing of embodiments of this disclosure. Numeric ranges are inclusive of the numbers defining the range.

The headings provided herein are not limitations of the various aspects or embodiments of this disclosure.

Other definitions of terms may appear throughout the specification. Before the exemplary embodiments are described in more detail, it is to be understood that this disclosure is not limited to particular embodiments described, and as such may vary. It is also to be understood that the terminology used herein is for the purpose of describing particular embodiments only, and is not intended to be limiting, since the scope of the present disclosure will be defined only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise. Thus, for example, reference to "a first hydrocolloid" includes a plurality of such candidate agents and reference to "the second hydrocolloid" includes reference to one or more second hydrocolloids and equivalents thereof known to those skilled in the art, and so forth.

### BRIEF DESCRIPTION OF THE DRAWINGS

Embodiments of the invention will now be described, by way of example only, with reference to the following Figures and Examples.
**Figure 1** shows a summary of the quantity (mg/g of protein) of amino acids in different proteins. The contribution of amino acids towards different attributes (total essential amino acids (Total EAA), hydrophobicity, hydrophilicity and flavour (sulphur, savoury, sweet, aromatic)) is shown for each protein source.
**Figure 2** shows representative examples of (A) scrambled or (B) baked food products produced using a liquid composition comprising pea protein isolate. The resultant scrambled or baked food products were scored based on their flavour, texture and visual appearance (C).
**Figure 3** shows representative examples of (A) scrambled or (B) baked food products produced using a liquid composition comprising fava bean protein. The resultant scrambled or baked food products were scored based on their flavour, texture and visual appearance (C).
**Figure 4** shows representative examples of (A) scrambled or (B) baked food products produced using a liquid composition comprising flax protein. The resultant scrambled or baked food products were scored based on their flavour, texture and visual appearance (C).
**Figure 5** shows representative examples of (A) scrambled or (B) baked food products produced using a liquid composition comprising hemp protein. The resultant scrambled or baked food products were scored based on their flavour, texture and visual appearance (C).
**Figure 6** shows representative examples of (A) scrambled or (B) baked food products produced using a liquid composition comprising hydrolysed pea protein. The resultant scrambled or baked food products were scored based on their flavour, texture and visual appearance (C).
**Figure 7** shows representative examples of (A) scrambled or (B) baked food products produced using a liquid composition comprising mung bean protein. The resultant scrambled or baked food products were scored based on their flavour, texture and visual appearance (C).
**Figure 8** shows representative examples of (A) scrambled or (B) baked food products produced using a liquid composition comprising rice protein. The resultant scrambled or baked food products were scored based on their flavour, texture and visual appearance (C).
**Figure 9** shows representative examples of (A) scrambled or (B) baked food products produced using a liquid composition comprising soya protein. The resultant scrambled or baked food products were scored based on their flavour, texture and visual appearance (C).
**Figure 10** shows representative examples of (A) scrambled or (B) baked food products produced using a liquid composition comprising wheat protein. The resultant scrambled or baked food products were scored based on their flavour, texture and visual appearance (C).
**Figure 11** shows representative examples of (A) scrambled or (B) baked food products produced using a liquid composition comprising potato protein. The resultant scrambled or baked food products were scored based on their flavour, texture and visual appearance (C).
**Figure 12** shows a summary of scoring for the scrambled products (A) or baked products (B) shown in Figures 1-11.
**Figure 13** shows (A) scoring for compositions comprising varying wt.%s of high acyl gellan gum; and (B) scoring for compositions comprising varying high acyl gellan gum to low acyl gellan gum ratios for various wt.%s of high acyl gellan gum.

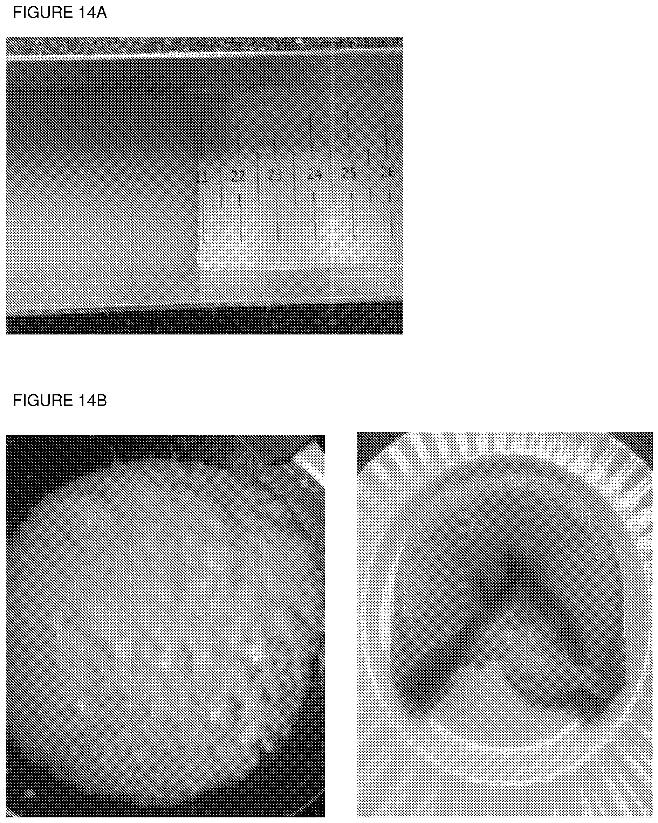

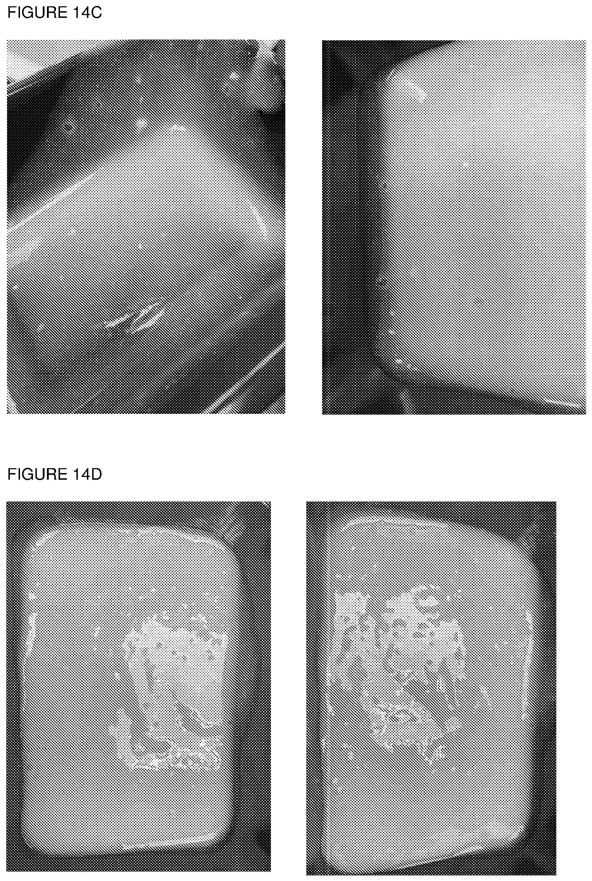

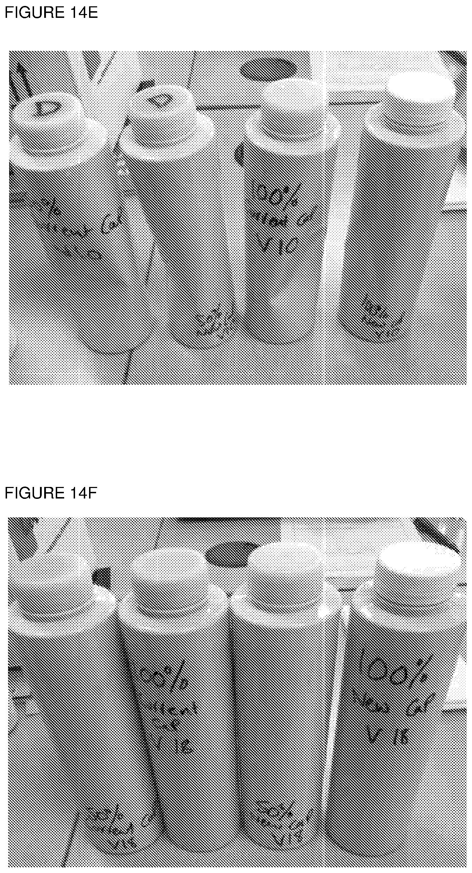

**Figure 14** shows (A) use of a Bostwick consistometer to measure viscosity of a liquid composition (measured at 21 cm); (B) scrambled (left) and baked (right) food products produced from a composition having a viscosity of 21; (C) clumping of a product due to inadequate mixing; (D) that a smooth liquid is observed when mixing was carried out for a sufficient time to achieve a viscosity in the range of 14-19; (E) when the composition was very viscous (viscosity 10), packaging deformity occurred during high pressure processing (HPP); and (F) when the composition was mixed to a viscosity of 18 (i.e. within the range of 14-19), that the packaging did not show any deformities during high pressure processing (HPP).
**Figure 15** shows a representative example of a food product prepared from a composition comprising additional ingredients (including calcium carbonate, pea starch, and vegetable oil).

### EXAMPLES

### EXAMPLE 1

### A Comparison of Different Proteins and Effects on Flavour, Texture, and Appearance in Downstream Food Applications

### Materials & Methods

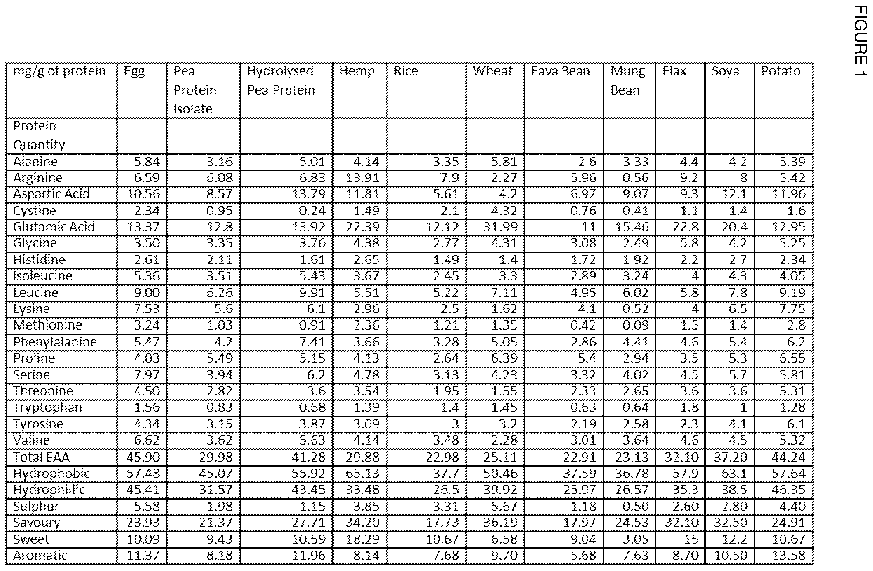

Compositions each comprising a different protein source ("Test Protein") were tested to identify which would perform best in an egg-replacement composition. The different protein sources tested are shown in Figure 1. Each liquid composition comprised a test protein, methylcellulose, high acyl gellan gum, low acyl gellan gum, water, and low amounts of other ingredients, including flavourings.

The test protein included either pea protein isolate, hydrolysed pea protein, hemp, rice protein, wheat, fava bean, mung bean, flax, soya, and potato.

The compositions each comprising a different protein source were tested in downstream food applications. The liquid compositions with the different test proteins were used to either prepare a scrambled or baked food product. The resultant scrambled or baked food product was scored by expert tasters out of 3 for its flavour, texture and visual appearance. The flavour, texture and appearance scoring was based on the following scale: 0 = very poor; 1 = poor; 2 = acceptable; and 3 = exceptional, with 3 being most similar to a chicken egg. Photographs were taken to document the visual appearance of the scrambled or baked food product.

The quantity and type of amino acids (mg/g of protein) for each protein source are shown in Figure 1.

### Results

### Pea Protein Isolate

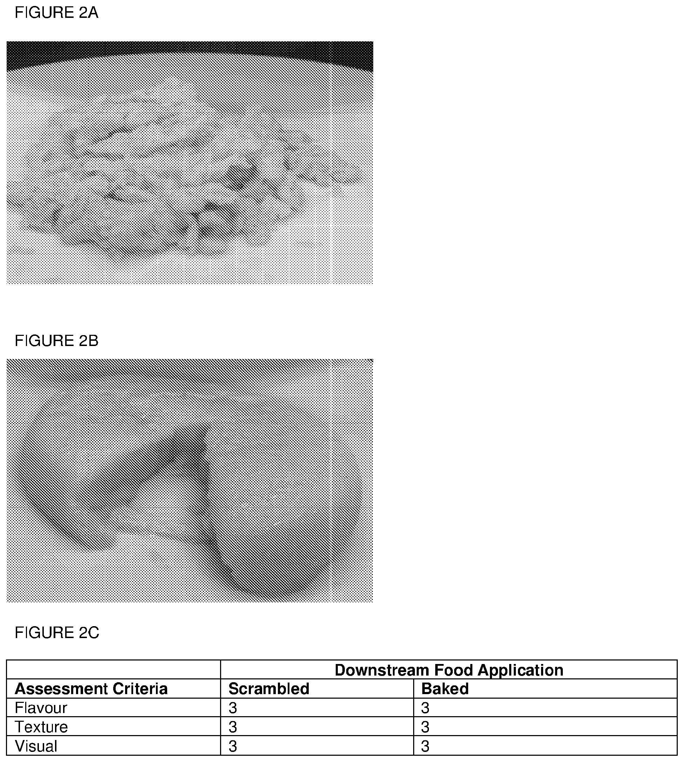

The test utilising a composition comprising a pea protein isolate achieved a perfect score of 3 for all assessment criteria for both a scrambled and baked food product (see Figures 2A-2C).

### Fava Bean

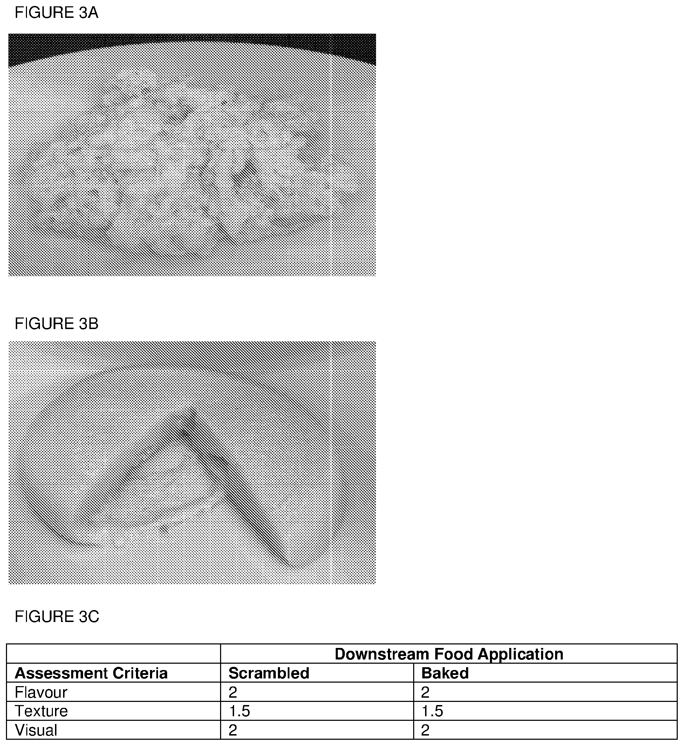

The scrambled and baked food products produced from a composition comprising fava bean had a poorer scoring for all assessment criteria when compared to the pea protein isolate (see Figures 3A-3C). In particular, it was observed during the preparation that there was foam and the product was lumpy during mixing. It was also observed that the product needed to rest for a minute to fully combine, whilst during scrambling, the product was fluffy and aerated (which could have been from having to whisk harder). In terms of texture, it was observed that both the scrambled and baked food products were very soft with no bite and dissolved in the mouth. It was also noted that both products had a bland flavour when compared to the pea protein isolate.

### Flax

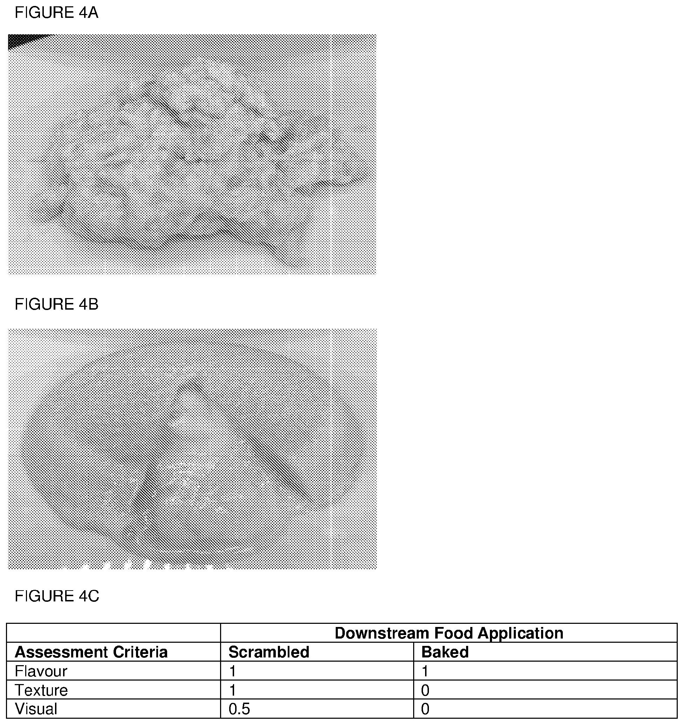

The scrambled and baked food products produced from a composition comprising flax scored very poorly for all assessment criteria (see Figures 4A-4C). Specifically, it was observed that when preparing the product, the powder clumped together, was very lumpy and did not break down after a rest like the other products with different proteins. During mixing into a liquid product, foaming was observed and that the product continued to thicken as a liquid. The product was very aerated and retained moisture during scrambling. At 8 minutes into baking, the composition became sloppy. In terms of flavour, the resultant baked and scrambled food products had an off taste, which was similar to bitter nuts. The texture of both the baked and scrambled food products was additionally considered too soft.

### Hemp

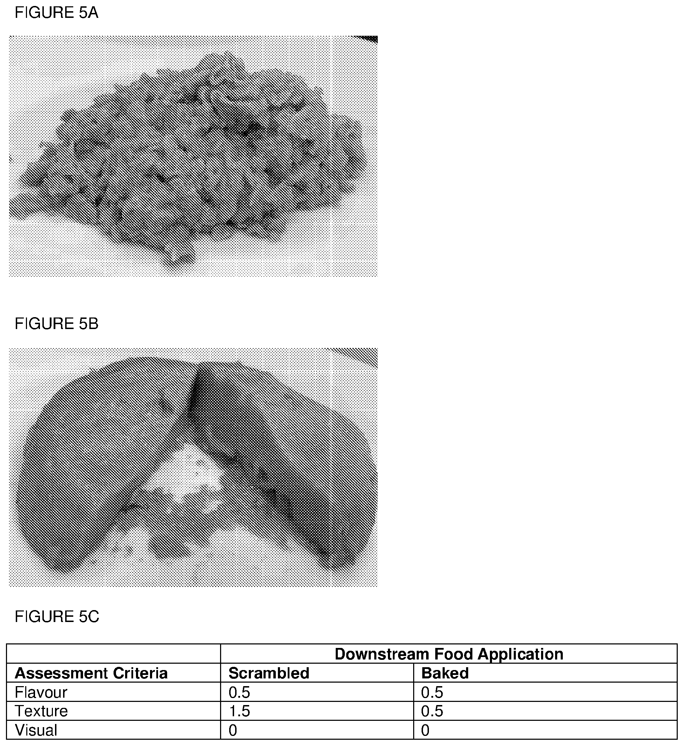

The scrambled and baked food products produced from a composition comprising hemp scored very poorly for all assessment criteria (see Figures 5A-5C). Due to hemp being very green, the visual appearance was scored at 0.5 and 0 for the scrambled and baked food products, respectively. The scrambled product stayed lumpy for quite a while and took far longer to reach a cooked state. The flavour of the products were bitter and slightly "pond-like". When baked, the product became domed in the oven and coloured on top.

### Hydrolysed Pea Protein

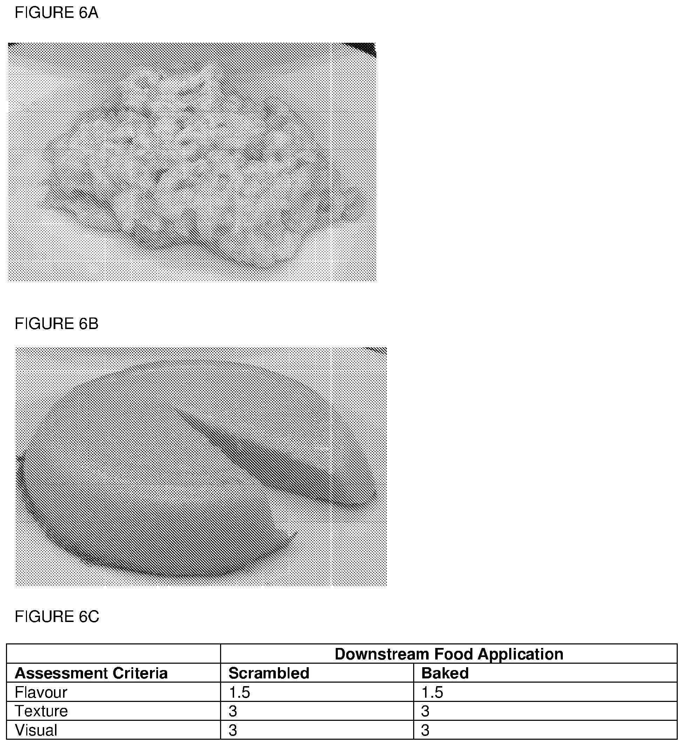

The products produced from a composition comprising hydrolysed pea scored similarly to that comprising the pea protein isolate (see Figures 6A-6C), albeit with slightly worse scoring for flavour. Hydrolysed pea protein was isolated from pea and subjected to enzymatic digestion with a protease.

### Mung Bean

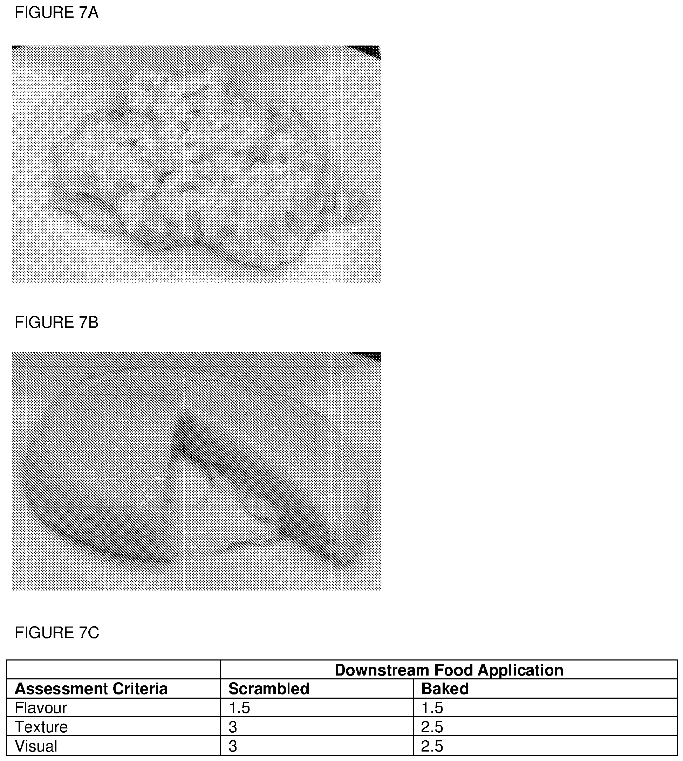

When mung bean was used, the resultant scrambled and baked food products did not score as highly as when using pea protein isolate (see Figures 7A-7C) but scored well for texture and visual appearance.

### Rice

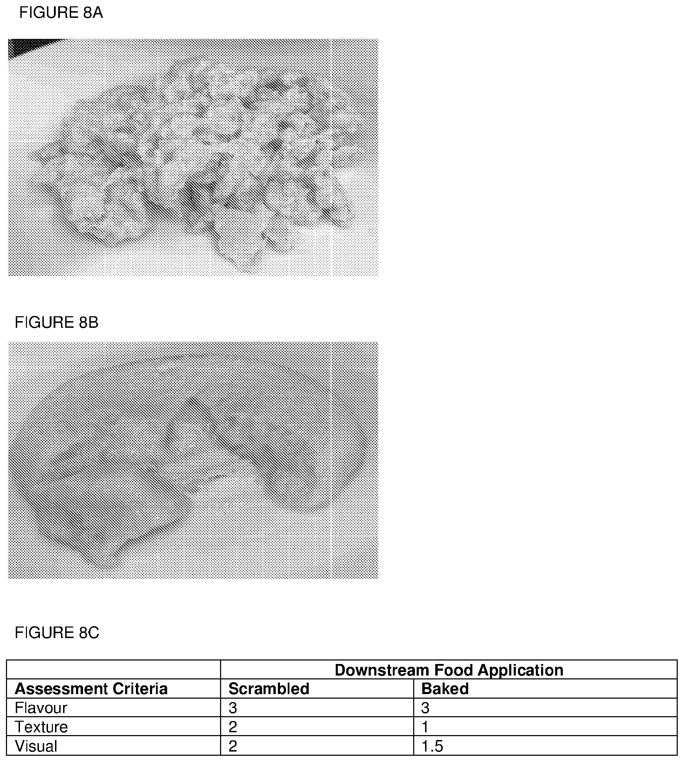

Products produced with a composition comprising rice scored well for flavour (see Figures 8A-8C). However, although texture and visual appearance was 2 (acceptable) for the scrambled egg product, texture and visual appearance were scored a 1 and 1.5 (respectively) for the baked product. Thus, it was concluded that rice was not a versatile protein source for the preparation of an egg-replacement composition. Specifically, it was observed that the product foamed. The resultant food products had a neutral flavour and good colour. Whilst the product took 9.5 min to scramble, (which foamed and formed a crust on top), baking took longer (10+ minutes) and did not set in the centre (Figure 8B).

### Soya

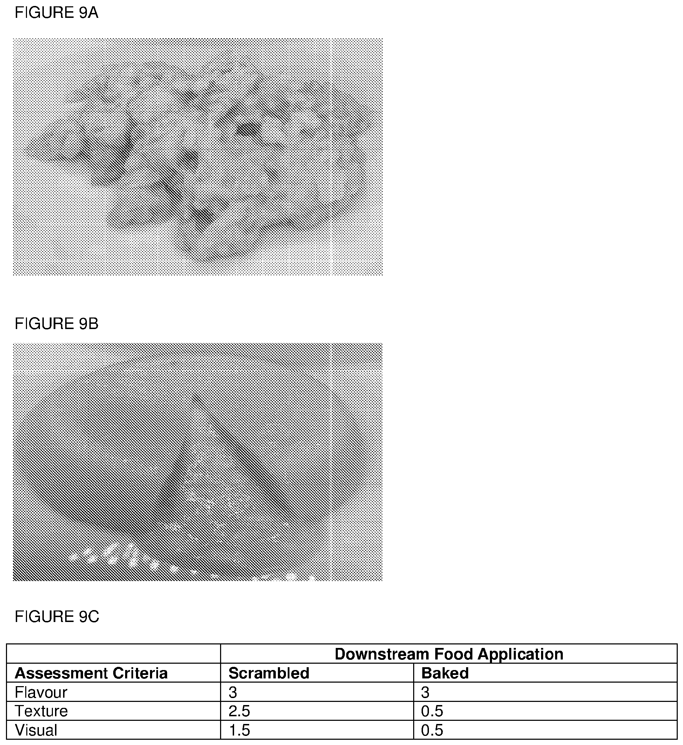

When soya was used, the baked food product scored poorly for texture and visual appearance, while the visual appearance of the scrambled egg product was relatively poor (see Figures 9A-9C). The product was lumpy during mixing and this was impossible to eliminate when whisking. The resultant food products had a clean flavour but took a long time to cook. A souffle formed when the product was baked.

### Wheat

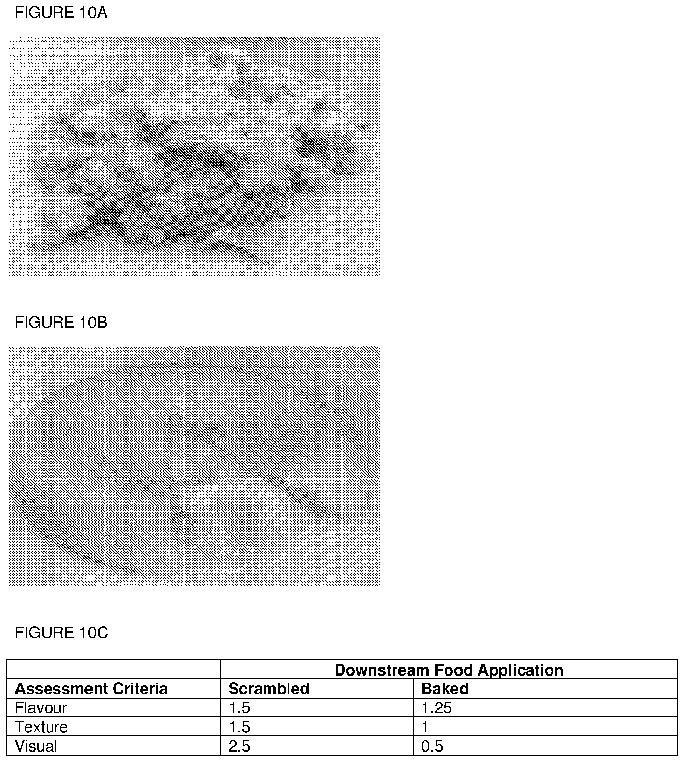

With the exception of the visual properties of the scrambled egg product, products produced using a composition comprising a wheat protein scored poorly for all criteria assessed (see Figures 10A-10C). It was observed that the composition was difficult to blend into a liquid and formed lumps. The product foamed during scrambling and performed differently, with an odd texture (pasty). The product stuck to the pan and took around 9.5 min to scramble. The resultant food products had a good colour, softer texture but tasted acidic. The baked food product domed a little in the oven and remained very liquid in the centre at 11 minutes into baking.

### Potato

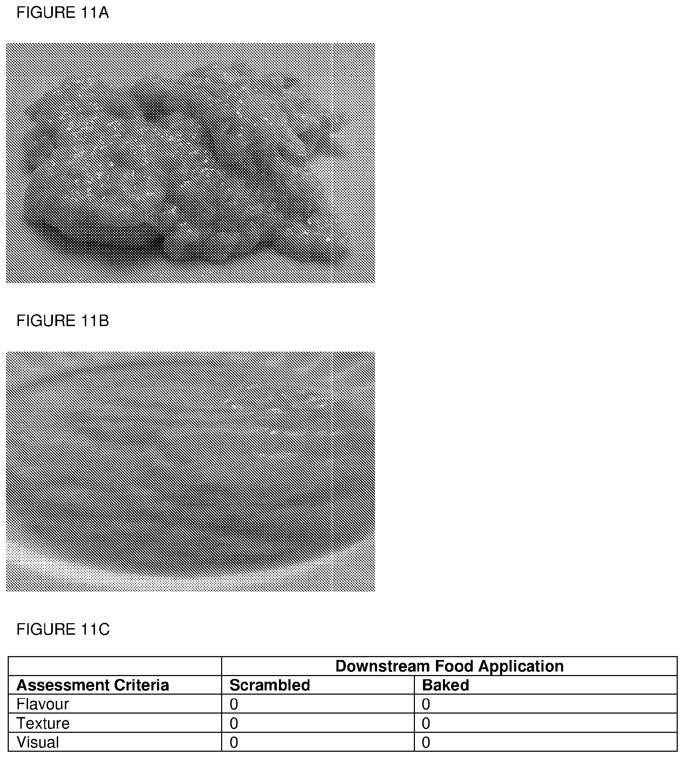

Products produced using a composition comprising potato protein showed the lowest scoring out of all the proteins tested (see Figures 11A-11C). A fluffy texture was observed, with no coagulation at all even after being returned to the pan and cooked for longer (water separation in the pan was also observed). The resultant food products had a very citrusy flavour.

### Conclusions

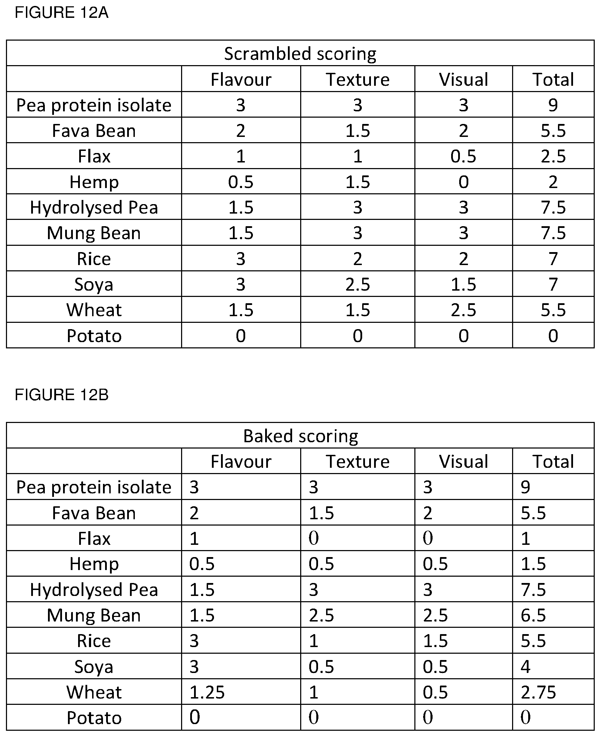

The scrambled products produced using a composition comprising a pea protein isolate demonstrated the highest overall scoring (9) for flavour, texture and visual appearance (see Figure 12A). This result was closely followed by scrambled products produced using compositions comprising hydrolysed pea (7.5), mung bean (7.5). In other words, the pea protein-containing compositions were consistently best. Scrambled products that demonstrated the lowest scoring included potato (0), flax (2.5) and hemp (2).

Likewise, baked products produced using a composition comprising a pea protein isolate demonstrated the highest overall scoring (9) for flavour, texture and visual appearance (see Figure 12B). High overall scores were achieved for baked products produced from compositions that comprised either hydrolysed pea (7.5) or mung bean (6.5) (see Figure 12B). The lowest overall scores were observed for where potato (0), flax (1) or hemp (1.5) protein was used.

It was observed that some proteins demonstrated better results when used in a composition for making a scrambled food product versus a baked food product. For example, whilst the use of soya protein to make a scrambled food product demonstrated an average scoring (7), it achieved a lower scoring when used to make a baked food product (4) (see Figures 12A and 12B). Such inconsistency was considered undesirable, especially given soya's allergenic properties.

Altogether, through this series of experiments, it was successfully demonstrated that legume proteins (with the possible exception of soya) found utility in producing both high quality scrambled and baked food products that closely resemble the corresponding products made using chicken eggs. In other words compositions including legume proteins (especially pea proteins) were particularly versatile for downstream food applications.

### EXAMPLE 2

### Identification and Characterisation of Hydrocolloids

### Materials & Methods

First, liquid compositions were prepared comprising the preferred pea protein isolate, differing in the amount of high acyl gellan gum (Experiment 1), ratio of high acyl to low acyl gellan gums, for varying high acyl gellan gum amounts (Experiment 2) or the amount of methylcellulose (Experiment 3). Secondly, the liquid compositions were cooked for 7 minutes on a low heat to produce a sample of scrambled egg. Thirdly, the samples were scored as described in Example 1.

### Results

A series of trials were performed to identify optimal hydrocolloids for use in a composition of the invention. Of those hydrocolloids, a combination including a high acyl gellan gum and low acyl gellan gum was considered optimal as the performance of the product (e.g. flavour, texture and appearance) was significantly improved by employing the use of low acyl gellan gum in addition to the high acyl gellan gum. These two hydrocolloids performed optimally in combination with methylcellulose.

### Experiment 1 - High Acyl Gellan Gum

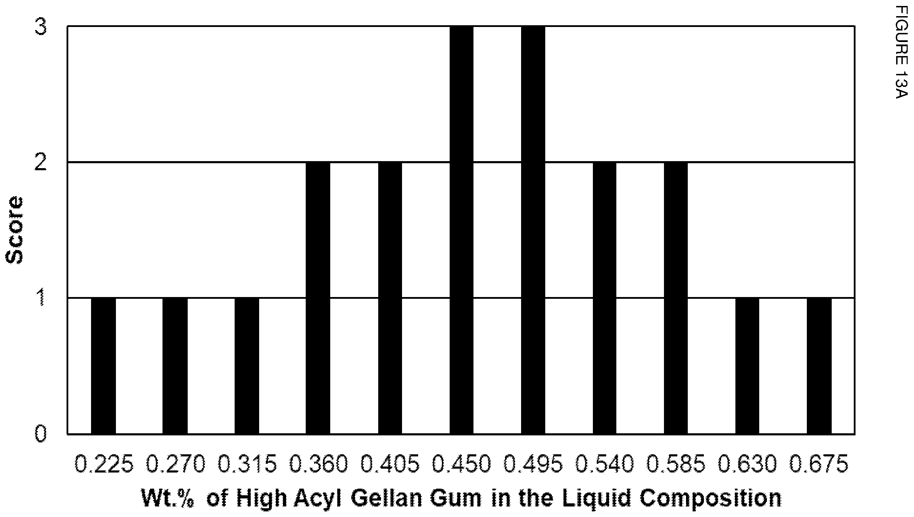

Trials were conducted to identify a suitable amount of high acyl gellan gum for use in an egg-replacement composition (see Figure 13A). A score of 2 or more was considered an acceptable cut-off for the product and corresponds to 0.34-0.61 wt.% of the total liquid composition (approximately 5.15-9.27 wt.% of the total dry composition). This corresponds to a weight ratio of high acyl gellan gum to pea protein isolate of 1:5.22 to 1:9.41. Given that 85 wt.% of the pea protein isolate is protein, this corresponds to a weight ratio of high acyl gellan gum to pea protein of 1:4.44 to 1:8.00.

### Experiment 2 - Ratio of High to Low Acyl Gellan Gum

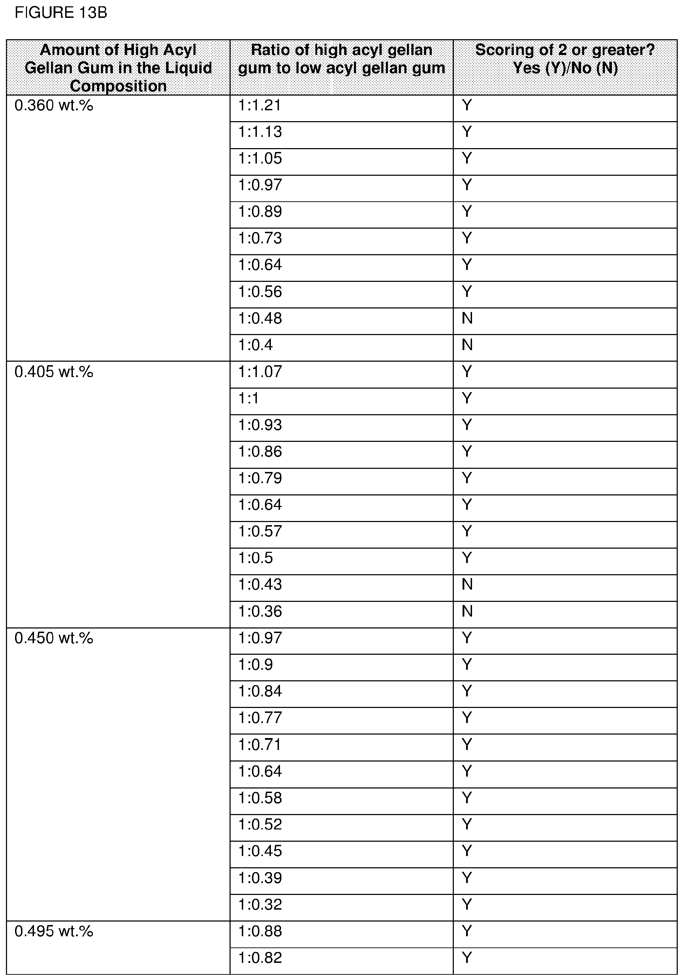

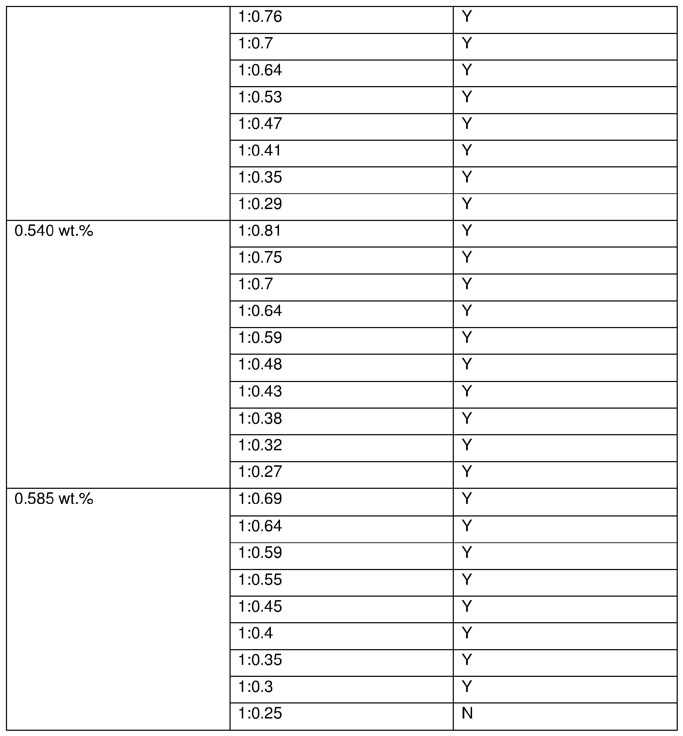

Subsequently, a series of trials were performed to identify an optimal ratio of high acyl to low acyl gellan gums for use in the composition (see Figure 13B). The trials employed the wt.% of high acyl gellan gum scoring 2 or above and varying amounts of low acyl gellan gum. A weight ratio of 1:0.5 to 1:1.3 of high acyl gellan gum to low acyl gellan gum was considered particularly suitable.

### Experiment 3 - Amount of Methylcellulose

Experiments were carried out to determine an optimal amount of methylcellulose, which was determined to be 1.30 wt.% of the total liquid composition (19.76 wt.% of the total dry composition). The product exhibited satisfactory performance even at +/-10 wt.% of methylcellulose, i.e. 1.17-1.43 wt.% of the total liquid composition (17.8-21.7 wt.% of the total dry composition). This corresponds to a weight ratio of methylcellulose to pea protein isolate of 1:2.23 to 1:2.73. Given that 85 wt.% of the pea protein isolate is protein, this corresponds to a weight ratio of methylcellulose to pea protein of 1:1.90 to 1:2.32.

### Conclusions

It should be noted that while the above-described wt.% ranges of high acyl gellan gum and ratios of high to low acyl gellan gum were considered optimal for producing scrambled egg (a key application demonstrating the functionality of the product), the wt.% could be varied outside of those limits when applied to specific applications. For example, a higher wt.% of high acyl gellan gum or a higher ratio of high to low acyl gellan gum may result in a firmer texture, which may be preferable for making products like egg mayonnaise sandwiches.

Through the above testing, an exemplary dry composition was developed having the following ingredients:

| **Exemplary Dry Composition** | **wt.%** |
|---|---|
| Pea protein isolate (85 wt.% of which is pea protein) | 48.48 |
| Methylcellulose | 19.76 |
| High Acyl Gellan Gum | 6.87 |
| Low Acyl Gellan Gum | 4.35 |
| Calcium Lactate | 6.08 |
| Other ingredients (including flavourings) | 14.46 |

### EXAMPLE 3

### Manufacturing a Liquid Composition

When attempting to manufacture a liquid egg-replacement composition, a number of technical difficulties were encountered in terms of ensuring high quality, functionality, stability, and packageability of said composition, especially at commercial production volumes. After extensive trials, two principal factors were identified that (independently or in combination) improved the liquid composition, when properly controlled. Said factors were viscosity and the amount of liquid (e.g. water) used to prepare the composition.

### Viscosity

The impact of the viscosity on the liquid composition itself and on downstream food products produced from it was investigated. During the process for manufacturing the liquid composition, the ingredients were mixed together and the viscosity was measured at regular intervals, with the viscosity being varied by adapting the mixing time and based on the shear rate employed.

Different shear rates and mixing times were trialled to identify the best parameters for optimal viscosity of the liquid composition, where there would be homogenous distribution of the ingredients throughout the composition and without affecting the stability of the hydrocolloids.

### Materials and Methods

A Bostwick consistometer was used to measure the viscosity of the liquid composition throughout the manufacturing process (see Figure 14A).

The Bostwick protocol was performed at 20 °C. After being placed on a countertop, a Bostwick consistometer was levelled lengthwise and width-wise (by altering the screws of the Bostwick consistometer and using its in-built spirit level). The gate of the Bostwick consistometer was checked to ensure it was closed and locked in place. A temperature reading of a sample from the liquid composition of the invention was taken before the remainder of the Bostwick protocol was performed (to ensure that the temperature of the sample was between 19-21°C). The sample of the liquid composition was stirred, placed into the reservoir of the Bostwick consistometer (where the sample was contained by the gate of the Bostwick consistometer) and levelled off. The gate of the Bostwick consistometer was opened and a countdown timer simultaneously started for 30 seconds. At 30 seconds, the flow of the sample of the liquid composition across the trough was measured in cm (using the in-built labelled cm gradations). A repeat measurement was performed, and a successful reading was confirmed when both measurements for each sample were within 0.5 cm of each other. The Bostwick was then rinsed and dried in preparation for the next sample reading.

When samples that were mixed to a low viscosity (viscosity measured as 21) (see Figure 14A) were used to prepare a scrambled and baked food product, the food products had poor quality in terms of texture, flavour and visual appearance (see Figure 14B). Thus, a viscosity of 21 was considered outside of acceptable limits. Associated inadequate mixing of the ingredients during the manufacturing process resulted in observed clumping (see Figure 14C). A smooth liquid was observed when mixing was carried out for a sufficient time to achieve a viscosity in the range of 14-19 (see Figure 14D).

When the liquid composition was mixed to a high viscosity of 10, the packaged liquid composition deformed under high pressure processing (see Figure 14E). Deformities to the bottled liquid compositions were also observed when the liquid composition had a viscosity of 13.

At least one mixing step was performed at a high shear rate of 78,000 s⁻¹ for 1 minute 30 seconds (once all ingredients had been combined with the liquid - this corresponds to total mix time of up to [and including] 6 minutes 15 seconds, which encompasses a typical time taken for the gradual addition of the dry ingredients to the liquid). This resulted in the viscosity of the liquid composition being in the range of 14-19. When the viscosity of the liquid composition was measured at 18, the packaged liquid composition did not show any deformities (see Figure 14F).

Thus, mixing to a viscosity in the range of 14-19 produced a liquid composition having excellent functionality and packageability.

Given that the hydrocolloids (especially methylcellulose are difficult to dissolve), a high enough shear rate is needed without it being so high that it damages the hydrocolloids. A high shear rate mixing step of 78,000 s⁻¹ was considered ideal. Without wishing to be bound by theory, it is believed that the shear rate can be varied by +/- 10% without significantly negatively affecting the product. A high shear rate mixing time of up to 6 minutes 15 seconds was considered optimal, as again it resulted in a product with the correct viscosity without damage to the hydrocolloids.

### Amounts of Water

The dry composition was hydrated at varying ratios to identify an amount of water to the remaining dry components that would result in a product with improved properties. In particular, stability against separation during storage was tested. The table below shows a summary of liquid compositions with different wt.% of dry composition and wt.% of water and whether they showed substantial separation. The functionality of food products prepared and cooked from the liquid compositions comprising differing wt.% of dry component to wt.% of water was also tested.

| **Dry Composition (wt.%)** | **Liquid (wt.%)** | **Substantial separation? Yes (Y)/No (N)** |
|---|---|---|
| 1 | 99 | Y |
| 2 | 98 | Y |
| 3 | 97 | Y |
| 4 | 96 | Y |
| 5 | 95 | N |
| 6 | 94 | N |
| 7 | 93 | N |
| 8 | 92 | N |
| 9 | 91 | N |
| 10 | 90 | N |

Altogether, 5-9 wt.% dry composition and 95-91 wt.% water were identified as optimal for the preparation of the liquid composition. There were few signs of separation, gelatinisation did not occur rapidly, and the raw and cooked food products resemble chicken eggs. Moreover, such liquid compositions could be prepared without wastage (e.g. as observed where lower wt.% water was employed). Moreover, the level of hydration was sufficient to allow the hydrocolloids to properly function.

Through the above testing, an exemplary liquid composition was developed having the following ingredients:

| **Exemplary Liquid Composition** | **wt.%** |
|---|---|
| Pea protein isolate (85 wt.% of which is pea protein) | 3.19 |
| Methylcellulose | 1.30 |
| High Acyl Gellan Gum | 0.45 |
| Low Acyl Gellan Gum | 0.29 |
| Calcium Lactate | 0.40 |
| Water | 93.31 |
| Other ingredients (including flavourings) | 1.06 |

### EXAMPLE 4

### Preparation of Quiche Using a Composition of the Invention

A pre-prepared pastry crust is placed into a quiche tin and the centre of the pastry crust is filled with the liquid composition of the invention. The quiche tin is placed in the oven and baked for approximately 30 minutes. The resultant vegan quiche is left to cool before being eaten. Any remaining quiche can be left in the fridge, without affecting the stability of the baked liquid composition of the invention.

### EXAMPLE 5

### Preparation of Cake Using a Composition of the Invention

The dry composition of the invention is mixed with water at a weight concentration ratio of water to powder at 1:0.070. The hydrated formulation is then admixed with sugar, vegan butter, vegetable oil, baking powder and vanilla extract in a mixing bowl. The resultant batter is then placed into a cake tin and baked for 30 minutes.

### EXAMPLE 6

### A Further Improved Composition of the Invention

Through extensive testing, it was identified that the addition of several new ingredients (including pea starch, vegetable oil, and calcium carbonate) improved the organoleptic properties of the baseline composition of the invention.

An exemplary dry composition was thus prepared as follows:

| **Exemplary Dry Composition** | **wt.%** |
|---|---|
| Pea protein isolate (85 wt.% of which is pea protein) | 39.45 |
| Methylcellulose | 19.73 |
| High Acyl Gellan Gum | 5.69 |
| Low Acyl Gellan Gum | 3.32 |
| Calcium Lactate | 4.64 |
| Pea Starch | 11.60 |
| Calcium Carbonate | 0.93 |
| Other ingredients (including flavourings) | 14.64 |

In view of the presence of pea starch, water retention was improved. Therefore, a greater powder to water ratio could be used without adversely affecting viscosity. An exemplary liquid composition was prepared as follows:

| **Exemplary Liquid Composition** | **wt.%** |
|---|---|
| Pea protein isolate (85 wt.% of which is pea protein) | 3.18 |
| Methylcellulose | 1.59 |
| High Acyl Gellan Gum | 0.46 |
| Low Acyl Gellan Gum | 0.27 |
| Calcium Lactate | 0.37 |
| Pea Starch | 0.94 |
| Calcium Carbonate | 0.07 |
| Vegetable Oil | 1.97 |
| Water | 89.84 |
| Other ingredients (including flavourings) | 1.31 |

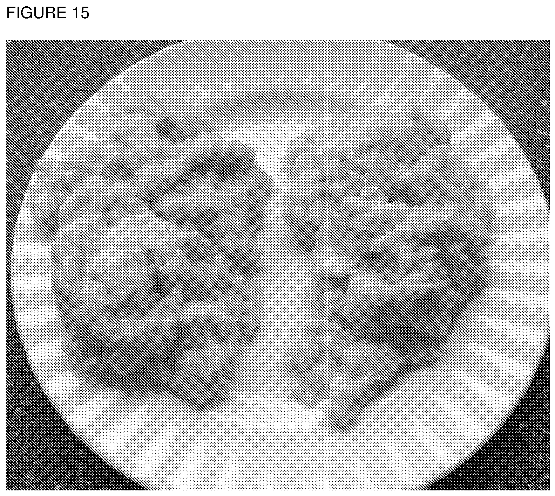

A scrambled food product was prepared using the above liquid composition and its flavour, visual appearance and texture were assessed (see Figure 15). Other features were recorded and are summarised in the table below:

| **Property of scrambled food product** | **Expert taster's comments** |
|---|---|
| Flavour | Improved egg-like flavour and better mouthfeel |
| Texture | Improved texture - food product was smoother, creamier and there was a more evenly distributed texture throughout cooking |
| Colour | Improved colour - lighter and more natural colour, with opaqueness removed |
| Yield | Improved - only 20% loss in yield following hard scramble |
| Nutrition | Improved - calcium and protein levels even more comparable to a chicken egg (calcium levels the same) |
| Cooking time | Improved - a soft scrambled egg can be cooked within 2 minutes, whilst a hard scrambled egg can be cooked within less than 5 minutes. There was a reduced cooking time when preparing a baked good. |
| Viscosity | Improved - the liquid composition was easier to pour and was consistently aeration free. |
| Resemblance to chicken egg | Improved - the nutritional qualities resemble a chicken egg due to the addition of vegetable oil (provides fat and lecithin, fat and lecithin is present in chicken eggs), calcium carbonate (mineral source as found in a chicken egg) and increased protein levels to resemble the levels in a chicken egg. The flavour is also similar to a chicken egg. |

The table below summarises the new ingredients that were added to the baseline composition of the invention and their specific effects on downstream food products:

| **Ingredient** | **Effect on product** |
|---|---|
| Calcium carbonate | Provided a plant milk creaminess |
| Pea starch | Improved texture, gelling and yield |
| Vegetable oil | Helped to create a smooth texture, improved mouthfeel and reduced aeration of the methylcellulose |
| Higher wt.% of methylcellulose | Provided more body and yield to scrambled eggs and omelettes |

## Claims

1. A dry composition for human consumption, the composition comprising:
(a) a legume protein, wherein the legume protein comprises a pea protein present at 30-35 wt.%;
(b) a starch, wherein the starch is a pea starch present at 10-14 wt.%;
(c) a first hydrocolloid, wherein the first hydrocolloid is a methylcellulose present at 18.7-20.7 wt.%;
(d) a second hydrocolloid, wherein the second hydrocolloid is a high acyl gellan gum present at 5-6 wt.%;
(e) a third hydrocolloid, wherein the third hydrocolloid is a low acyl gellan gum present at 2-4 wt.%;
(f) a salt, wherein the salt is calcium lactate present at 3-6 wt.%; and
(g) calcium carbonate present at 0.6-1.2 wt.%.

2. A liquid composition for human consumption, the composition comprising:
(a) a legume protein, wherein the legume protein comprises a pea protein present at 2-3 wt.%;
(b) a starch, wherein the starch is a pea starch present at 0.6-1.2 wt.%;
(c) a first hydrocolloid, wherein the first hydrocolloid is a methylcellulose present at 1.51-1.67 wt.%;
(d) a second hydrocolloid, wherein the second hydrocolloid is a high acyl gellan gum present at 0.4-0.5 wt.%;
(e) a third hydrocolloid, wherein the third hydrocolloid is a low acyl gellan gum present at 0.20-0.34 wt.%;
(f) a salt, wherein the salt is calcium lactate present at 0.30-0.45 wt.%;
(g) calcium carbonate present at 0.05-0.09 wt.%;
(h) a lipid composition, wherein the lipid composition is a vegetable oil present at 1.5-2.5 wt.%; and
(i) water present at 88-91 wt.%.

3. The dry composition according to claim 1 or the liquid composition according to claim 2, wherein:
(a) the composition further comprises an emulsifier, optionally wherein the emulsifier comprises guar gum, carboxymethylcellulose and dextrose; and/or
(b) the composition does not comprise carrageenan.

4. The dry composition or liquid composition according to any one of the preceding claims, wherein the total hydrophobic amino acid content present is less than 63.1 mg/g of protein.

5. The dry composition or liquid composition according to any one of the preceding claims, wherein the total hydrophobic amino acid content present is 30-60 mg/g of protein, 40-50 mg/g of protein or 26-38 mg/g of protein.

6. The liquid composition according to any one of claims 2-5, wherein the vegetable oil is a corn oil.

7. A method for manufacturing a foodstuff, the method comprising:
(a) admixing the dry composition according to any one of claims 1 or 3-5 or the liquid composition of any one of claims 2-6 with a food ingredient and optionally cooking; or
(b) cooking the liquid composition according to any one of claims 2-6.

8. A foodstuff comprising the dry composition according to any one of claims 1 or 3-5 or the liquid composition according to any one of claims 2-6 and optionally a food ingredient.

## Patentansprüche

1. Eine trockene Zusammensetzung für den menschlichen Verzehr, wobei die Zusammensetzung Folgendes umfasst:
(a) ein Leguminosenprotein, wobei das Leguminosenprotein ein Erbsenprotein umfasst, das zu 30-35 Gew.-% vorhanden ist;
(b) eine Stärke, wobei die Stärke eine Erbsenstärke ist, die zu 10-14 Gew.-% vorhanden ist;
(c) ein erstes Hydrokolloid, wobei das erste Hydrokolloid eine Methylcellulose ist, die zu 18,7-20,7 Gew.-% vorhanden ist;
(d) ein zweites Hydrokolloid, wobei das zweite Hydrokolloid ein Gellangummi mit hohem Acylgehalt ist, das zu 5-6 Gew.-% vorhanden ist;
(e) ein drittes Hydrokolloid, wobei das dritte Hydrokolloid ein Gellangummi mit niedrigem Acylgehalt ist, das zu 2-4 Gew.-% vorhanden ist;
(f) ein Salz, wobei das Salz Calciumlactat ist, das zu 3-6 Gew.-% vorhanden ist; und
(g) Calciumcarbonat, das zu 0,6-1,2 Gew.-% vorhanden ist.

2. Eine flüssige Zusammensetzung für den menschlichen Verzehr, wobei die Zusammensetzung Folgendes umfasst:
(a) ein Leguminosenprotein, wobei das Leguminosenprotein ein Erbsenprotein umfasst, das zu 2-3 Gew.-% vorhanden ist;
(b) eine Stärke, wobei die Stärke eine Erbsenstärke ist, die zu 0,6-1,2 Gew.-% vorhanden ist;
(c) ein erstes Hydrokolloid, wobei das erste Hydrokolloid eine Methylcellulose ist, die zu 1,51-1,67 Gew.-% vorhanden ist;
(d) ein zweites Hydrokolloid, wobei das zweite Hydrokolloid ein Gellangummi mit hohem Acylgehalt ist, das zu 0,4-0,5 Gew.-% vorhanden ist;
(e) ein drittes Hydrokolloid, wobei das dritte Hydrokolloid ein Gellangummi mit niedrigem Acylgehalt ist, das zu 0,20-0,34 Gew.-% vorhanden ist;
(f) ein Salz, wobei das Salz ein Calciumlactat ist, das zu 0,30-0,45 Gew.-% vorhanden ist;
(g) Calciumcarbonat, das zu 0,05-0,09 Gew.-% vorhanden ist;
(h) eine Lipidzusammensetzung, wobei die Lipidzusammensetzung ein Pflanzenöl ist, das zu 1,5-2,5 Gew.-% vorhanden ist; und
(i) Wasser, das zu 88-91 Gew.-% vorhanden ist.

3. Trockene Zusammensetzung nach Anspruch 1 oder flüssige Zusammensetzung nach Anspruch 2, wobei:
(a) die Zusammensetzung ferner einen Emulgator umfasst, wobei der Emulgator optional Guargummi, Carboxymethylcellulose und Dextrose umfasst; und/oder
(b) die Zusammensetzung kein Carrageenan umfasst.

4. Trockene Zusammensetzung oder flüssige Zusammensetzung nach einem der vorhergehenden Ansprüche, wobei der vorhandene Gesamtgehalt an hydrophoben Aminosäuren weniger als 63,1 mg/g Protein beträgt.

5. Trockene Zusammensetzung oder flüssige Zusammensetzung nach einem der vorhergehenden Ansprüche, wobei der vorhandene Gesamtgehalt an hydrophoben Aminosäuren 30-60 mg/g Protein, 40-50 mg/g Protein oder 26-38 mg/g Protein beträgt.

6. Flüssige Zusammensetzung nach einem der Ansprüche 2-5, wobei das Pflanzenöl ein Maisöl ist.

7. Ein Verfahren zur Herstellung eines Lebensmittels, wobei das Verfahren Folgendes umfasst:
(a) Vermischen der trockenen Zusammensetzung nach einem der Ansprüche 1 oder 3-5 oder der flüssigen Zusammensetzung nach einem der Ansprüche 2-6 mit einer Lebensmittelzutat und optional Kochen; oder
(b) Kochen der flüssigen Zusammensetzung nach einem der Ansprüche 2-6.

8. Ein Lebensmittel, das die trockene Zusammensetzung nach einem der Ansprüche 1 oder 3-5 oder die flüssige Zusammensetzung nach einem der Ansprüche 2-6 und optional eine Lebensmittelzutat umfasst.

## Revendications

1. Composition sèche destinée à la consommation humaine, la composition comprenant :
(a) une protéine de légumineuse, la protéine de légumineuse comprenant une protéine de pois présente dans une quantité de 30 à 35 % en poids ;
(b) un amidon, l'amidon étant un amidon de pois présent dans une quantité de 10 à 14 % en poids ;
(c) un premier hydrocolloïde, le premier hydrocolloïde étant une méthylcellulose présente dans une quantité de 18,7 à 20,7 % en poids ;
(d) un deuxième hydrocolloïde, le deuxième hydrocolloïde étant une gomme gellane à forte teneur en groupes acyle présente dans une quantité de 5 à 6 % en poids ;
(e) un troisième hydrocolloïde, le troisième hydrocolloïde étant une gomme gellane à faible teneur en groupes acyle présente dans une quantité de 2 à 4 % en poids ;
(f) un sel, le sel étant du lactate de calcium présent dans une quantité de 3 à 6 % en poids ; et
(g) du carbonate de calcium présent dans une quantité de 0,6 à 1,2 % en poids.

2. Composition liquide destinée à la consommation humaine, la composition comprenant :
(a) une protéine de légumineuse, la protéine de légumineuse comprenant une protéine de pois présente dans une quantité de 2 à 3 % en poids ;
(b) un amidon, l'amidon étant un amidon de pois présent dans une quantité de 0,6 à 1,2 % en poids ;
(c) un premier hydrocolloïde, le premier hydrocolloïde étant une méthylcellulose présente dans une quantité de 1,51 à 1,67 % en poids ;
(d) un deuxième hydrocolloïde, le deuxième hydrocolloïde étant une gomme gellane à forte teneur en groupes acyle présente dans une quantité de 0,4 à 0,5 % en poids ;
(e) un troisième hydrocolloïde, le troisième hydrocolloïde étant une gomme gellane à faible teneur en groupes acyle présente dans une quantité de 0,20 à 0,34 % en poids ;
(f) un sel, le sel étant du lactate de calcium présent dans une quantité de 0,30 à 0,45 % en poids ;
(g) du carbonate de calcium présent dans une quantité de 0,05 à 0,09 % en poids ;
(h) une composition lipidique, la composition lipidique étant une huile végétale présente dans une quantité de 1,5 à 2,5 % en poids ; et
(i) de l'eau présente dans une quantité de 88 à 91 % en poids.

3. Composition sèche selon la revendication 1 ou composition liquide selon la revendication 2,
(a) la composition comprenant en outre un émulsifiant, l'émulsifiant comprenant optionnellement de la gomme de guar, de la carboxyméthylcellulose et du dextrose ; et/ou
(b) la composition ne comprenant pas de carraghénane.

4. Composition sèche ou composition liquide selon l'une quelconque des revendications précédentes, la quantité totale d'acides aminés hydrophobes présente étant inférieure à 63,1 mg/g de protéine.

5. Composition sèche ou composition liquide selon l'une quelconque des revendications précédentes, la quantité totale d'acides aminés hydrophobes présente étant de 30 à 60 mg/g de protéine, 40 à 50 mg/g de protéine ou 26 à 38 mg/g de protéine.

6. Composition liquide selon l'une quelconque des revendications 2 à 5, l'huile végétale étant une huile de maïs.

7. Procédé de fabrication d'un aliment, le procédé comprenant :
(a) un mélange par addition de la composition sèche selon l'une quelconque des revendications 1 ou 3 à 5 ou de la composition liquide selon l'une quelconque des revendications 2 à 6 avec un ingrédient alimentaire et optionnellement une cuisson ; ou
(b) une cuisson de la composition liquide selon l'une quelconque des revendications 2 à 6.

8. Aliment comprenant la composition sèche selon l'une quelconque des revendications 1 ou 3 à 5 ou la composition liquide selon l'une quelconque des revendications 2 à 6, et optionnellement un ingrédient alimentaire.
